# EUROPÄISCHE PATENTSCHRIFT

(11) **EP 1 160 052 B1**
(45) Veröffentlichungstag und Bekanntmachung des Hinweises auf die Patenterteilung: **08.10.2003**
(21) Anmeldenummer: 01108587.5
(22) Anmeldetag: 05.04.2001
(51) Int. Cl.: B23Q 7/04, B23Q 39/02

(54) **Drehmaschine**
Lathe
Tour

(30) Priorität: 31.05.2000 DE 10027189; 17.08.2000 DE 10040224
(43) Veröffentlichungstag der Anmeldung: 05.12.2001
(73) Patentinhaber: Index-Werke GmbH & Co. KG Hahn & Tessky, 73730 Esslingen (DE)
(72) Erfinder: Grossmann, Walter, 73666 Baltmannsweiler (DE)
(74) Vertreter: Beck, Jürgen, Dr. Dipl.-Phys.

(56) Entgegenhaltungen:
- EP-A- 0 476 598
- EP-A- 0 492 344
- EP-A- 0 888 840
- EP-A- 0 900 627
- DE-A- 3 831 613
- DE-A- 4 016 691
- DE-C- 3 904 299
- JP-A- 3 251 301
- JP-A- 60 034 202
- JP-A- 61 197 103
- JP-A- 2000 246 579
- US-A- 4 063 577
- US-A- 4 439 090
- US-A- 5 419 223

## Beschreibung

Die Erfindung betrifft eine Drehmaschine entsprechend dem Oberbegriff des Anspruchs 1, wie z.B. aus der US-A-4 439 090 bekannt.

Bei derartigen Drehmaschinen, bei denen der Werkzeugträger häufig als Revolver ausgebildet ist und einen Revolverkopf zur Aufnahme der Werkzeuge aufweist, sind oftmals zusätzliche Funktionseinheiten erforderlich, die im Zusammenhang mit der Werkstückbearbeitung im Arbeitsraum zum Einsatz gebracht werden müssen.

Derartige Funktionseinheiten sind häufig aufgrund der räumlichen und der Kraftverhältnisse schwer am Revolver anzuordnen und würden eine Sonderkonstruktion des Revolvers verlangen.

Im übrigen führt die Anordnung derartiger Funktionseinheiten am Revolver zur Beschränkung der einsetzbaren Werkzeuge und außerdem auch vielfach zur Vergrößerung des Raumbedarfs für den Revolver und/oder zur Einschränkung der Bewegbarkeit des Revolvers im Arbeitsraum.

Der Erfindung liegt daher die Aufgabe zugrunde, eine Drehmaschine der gattungsgemäßen Art derart zu verbessern, daß im Zusammenhang mit der Werkstückbearbeitung wirksame Funktionseinheiten einfach im Arbeitsraum zum Einsatz gebracht werden können, ohne grundsätzlich die Konstruktion der Maschine und die Dimensionierung des Arbeitsraums zu verändern.

Diese Aufgabe wird erfindungsgemäß durch die Merkmale des Anspruchs 1 gelöst.

Besonders günstig läßt sich der Arm dann anordnen, wenn der Arm in der Arbeitsstellung von einer dem die Arbeitsspindel tragenden Maschinengestell gegenüberliegenden Seite des Arbeitsraums in diesen eingreift, so daß in dem Bereich des Arbeitsraums, der an das die Arbeitsspindel tragende Maschinengestell angrenzt, keine Vorkehrungen für die Positionierung des Arms erforderlich sind.

Ferner ist es zweckmäßig, wenn der Arm in der Ruhestellung auf einer dem die Arbeitsspindel tragenden Maschinengestell gegenüberliegenden Seite des Arbeitsraums angeordnet ist, so daß auch in der Ruhestellung der Arm den Raumbedarf des Maschinenkonzepts, insoweit als dieses ohne die am Arm vorgesehene Funktionseinheit arbeitet, nicht beeinträchtigt.

Hinsichtlich der Lagerung des Arms sind die unterschiedlichsten Möglichkeiten denkbar. So sieht die erfindungsgemäße Lösung vor, daß sich der Arm ausgehend von mindestens einem am Maschinengestell abgestützten Lager erstreckt.

Die Lagerung des Arms könnte an verschiedenen Stellen desselben erfolgen. Besonders günstig ist es, wenn der Arm mit einem der Aufnahme abgewandten Bereich an dem Lager gelagert ist.

Im Gegensatz zum Lagern des Arms in nur einem Lager ist alternativ dazu vorgesehen, daß der Arm an zwei im Abstand voneinander angeordneten Lagern gehalten ist, die ihrerseits vorzugsweise in separaten Lagergehäusen angeordnet sind.

Eine Möglichkeit der Anordnung des an dem Maschinengestell abgestützten Lagers sieht vor, daß das Lager in einem auf einem Spindelstock angeordneten Lagergehäuse angeordnet ist, da damit in einfacher und raumsparender Weise die Möglichkeit besteht, das Lager ohne Veränderung des Grundkonzepts der Maschine, umfassend die Anordnung von Arbeitsspindel und Werkzeugrevolvern, anzuordnen.

Eine alternative Lösung hierzu sieht vor, daß das Lager in einem Lagergehäuse angeordnet ist, welches sich mit einem Fuß unmittelbar am Maschinengestell abstützt. In diesem Fall ist zwar ein zusätzlicher Fuß notwendig, allerdings ist damit eine unmittelbare Abstützung des Lagers am Maschinengestell realisierbar.

Besonders günstig ist es hierbei, wenn der Fuß sich von einem Bereich außerhalb möglicher Arbeitsspindelpositionen und Werkzeugträgerpositionen von dem Maschinengestell ausgehend erhebt und sich bis zu dem Lager für den Arm erstreckt.

Eine besonders zweckmäßige Lösung sieht vor, daß der Fuß das Lager auf einer dem Maschinengestell gegenüberliegenden Seite einer Arbeitsspindel positioniert hält, wobei hierzu vorzugsweise der Fuß winkel- oder bogenförmig ausgebildet ist.

Eine besonders günstige Lösung für die Anordnung des Lagers sieht vor, daß das Lager für den Arm in einer Ebene angeordnet ist, welche auf einer dem Maschinengestell gegenüberliegenden Seite des Arbeitsraums verläuft, so daß für die Anordnung des Arms keinerlei räumliche Beschränkungen bestehen. Besonders zweckmäßig ist hierbei, wenn das Lager für den Arm auf einer dem den Spindelstock tragenden Maschinengestell gegenüberliegenden Seite des Spindelstocks angeordnet ist, wobei dieser Spindelstock beispielsweise ein beweglicher Spindelstock sein kann und das Lager durch ein entsprechend ausgebildetes Lagergehäuse keinerlei Beeinträchtigung für die Bewegbarkeit des beweglichen Spindelstocks darstellt.

Hinsichtlich der Ausbildung des Lagers selbst wurden bislang keine näheren Angaben gemacht. So ist jede Art von Lagerung des Arms denkbar, insbesondere ist es denkbar, dem Arm jegliche Art von Bewegungsmöglichkeit durch entsprechende Ausbildung des Lagers zu verleihen.

Aus Gründen einer optimalen Präzision und günstigen Führung des Arms Lagert das Lager den Arm in einem Schwenklager relativ zum Maschinengestell um eine Schwenkachse schwenkbar.

Die Schwenkachse kann dabei in unterschiedlichster Art und Weise ausgerichtet sein. Eine günstige Lösung sieht vor, daß die Schwenkachse auf einer dem Maschinengestell gegenüberliegenden Seite des Arbeitsraums angeordnet ist.

Vorzugsweise ist dabei vorgesehen, daß die Schwenkachse im Abstand von einer durch die Spindelachse hindurchverlaufenden und zur X-Achse des Werkzeugträgers parallelen Ebene angeordnet ist.

Eine besonders günstige Lösung sieht vor, daß die Schwenkachse des Schwenklagers parallel zur Spindelachse verläuft.

Außerdem sieht die erfindungsgemäße Lösung, die optimale Bewegungsmöglichkeiten des Arms gewährleistet, vor, daß der Arm im Schwenklager in Richtung der Schwenkachse verschieblich gelagert ist.

Hinsichtlich der Ausbildung des Arms wurden bislang keine näheren Angaben gemacht. So sieht eine vorteilhafte Lösung vor, daß der Arm einen Armkörper und einen sich quer zu diesem erstreckenden Armkörperträger umfaßt, wobei der Armkörperträger vorteilhafterweise stets außerhalb des Arbeitsraums verläuft, während sich der Arm entsprechend der Arbeitsstellung und Ruhestellung in den Arbeitsraum hinein erstreckt bzw. außerhalb desselben steht.

Vorzugsweise ist der Armkörperträger so ausgerichtet, daß er sich ungefähr parallel zur Z-Achse erstreckt.

Ferner ist zweckmäßigerweise der Armkörperträger so angeordnet, daß er auf einer dem die Arbeitsspindel tragenden Maschinengestell gegenüberliegenden Seite des Arbeitsraums angeordnet ist.

Dabei ist der Armkörperträger zweckmäßigerweise in dem am Maschinengestell abgestützten Lager gelagert.

Im einfachsten Fall ist der Armkörperträger als Schwenkwelle ausgebildet, welche das Schwenklager durchsetzt und in dem Schwenklager schwenkbar und gegebenenfalls noch linear verschiebbar gelagert ist.

Hinsichtlich der Bewegungsmöglichkeiten des Arms ist vorzugsweise vorgesehen, daß der Arm durch eine Betätigungseinrichtung in die Ruhestellung und aus der Ruhestellung heraus bewegbar ist.

Eine derartige Betätigungseinrichtung kann den Arm in die unterschiedlichsten Richtungen bewegen. Besonders günstig ist es, wenn der Arm durch die Betätigungseinrichtung in Z-Richtung bewegbar ist.

Ferner ist es ergänzend oder alternativ hierzu günstig, wenn der Arm durch die Betätigungseinrichtung quer zur Spindelachse bewegbar ist.

Die Bewegbarkeit des Arms quer zur Spindelachse könnte theoretisch auch eine lineare Bewegung sein. Eine besonders günstige Lösung sieht jedoch vor, daß die Betätigungseinrichtung einen den Arm quer zur Spindelachse bewegenden Schwenkantrieb aufweist.

Hinsichtlich der Antriebe der Betätigungseinrichtung sind die unterschiedlichsten Lösungen denkbar.

Beispielsweise ist es denkbar, die Antriebe so auszubilden, daß sie den Arm zwischen mechanisch vorgebbaren Endstellungen bewegen.

Eine besonders günstige Lösung sieht jedoch vor, daß die Betätigungseinrichtung einen positionssteuerbaren Vorschubantrieb für die Bewegung des Arms in Z-Richtung aufweist.

Alternativ oder ergänzend hierzu sieht eine günstige Lösung vor, daß die Betätigungseinrichtung einen den Arm quer zur Spindelachse positionsgesteuert bewegenden Vorschubantrieb aufweist.

Derartige positionsgesteuerte Vorschubantriebe sind vorzugsweise rechnergesteuerte Vorschubantriebe, wie sie üblicherweise bei Werkzeugmaschinen Verwendung finden, insbesondere NC-gesteuerte Vorschubantriebe, die sowohl als Linear- als auch als Schwenkantriebe ausgebildet sein können.

Ferner sieht eine günstige Realisierungsmöglichkeit der Betätigungseinrichtung vor, daß diese mindestens eine Stelleinrichtung umfaßt, die eine eine Ausgangsstellung der Funktionseinheit definierende Endstellung aufweist.

Bei der bisherigen Erläuterung der einzelnen Ausführungsbeispiele wurde im Zusammenhang mit der Betätigungseinrichtung davon ausgegangen, daß diese auch zu einer exakten Positionierung des Arms eingesetzt wird.

Alternativ hierzu ist es jedoch im Rahmen der erfindungsgemäßen Lösung auch denkbar, daß die Aufnahme in der Arbeitsstellung mit dem Werkzeugträger in Wirkverbindung bringbar ist und somit zum Erreichen einer wirksamen Stellung der Funktionseinheit durch den Werkzeugträger relativ zur Arbeitsspindel in Richtung mindestens einer der X- oder Z-Achsen positionierbar ist.

Diese Lösung hat den Vorteil, daß die Betätigungseinrichtung zum Bewegen des Armes von der Ruhestellung in die Arbeitsstellung und umgekehrt nicht so ausgeführt sein muß, daß mit dieser eine exakte Positionierung der Aufnahme und der Funktionseinheit möglich ist, sondern es lediglich erforderlich ist, sicherzustellen, daß die Endstellung erreicht wird.

Diese Lösung hat den großen Vorteil, daß der ohnehin zur exakten Positionierung der Werkzeuge vorgesehene Werkzeugträger gleichzeitig dazu eingesetzt werden kann, auch die Aufnahme und die Funktionseinheit exakt zu positionieren und somit die Genauigkeit hinsichtlich der Positionierung der Aufnahme und der Funktionseinheit der Genauigkeit der Positionierung der Werkzeuge mit dem Werkzeugträger entspricht.

Eine besonders bevorzugte Lösung sieht dabei vor, daß der Arm in der Arbeitsstellung der Aufnahme relativ zum Maschinengestell nur insoweit beweglich ist, als er den Bewegungen des Werkzeugträgers relativ zum Maschinengestell in Richtung mindestens einer der X- oder Z-Achsen folgen kann.

Eine weitere vorteilhafte Weiterbildung dieser Lösung sieht vor, daß die Aufnahme von der Ruhestellung in eine Ausgangsstellung bewegbar ist, in welcher die Wirkverbindung mit dem Werkzeugträger herstellbar ist.

Das heißt, daß die Betätigungseinrichtung lediglich so ausgebildet sein muß, daß mit dieser der Arm von der Ruhestellung in die Ausgangsstellung bringbar ist und dann ausgehend von der Ausgangsstellung der Werkzeugträger die exakte Positionierung des Arms in allen Arbeitsstellungen übernimmt.

Um die Wechselwirkung zwischen dem Arm und dem Werkzeugträger herzustellen, ist vorzugsweise vorgesehen, daß die Aufnahme mit einem Mitnehmer versehen ist, auf welchem bei bestehender Wirkverbindung mit dem Werkzeugträger ein Mitnahmeelement am Werkzeugträger einwirkt.

Hinsichtlich der Ausbildung des Mitnahmeelements sind die unterschiedlichsten Möglichkeiten denkbar. Eine vorteilhafte Lösung sieht vor, daß das Mitnahmeelement in einer Ausgangsstellung am Mitnehmer zur Anlage bringbar ist.

Vorzugsweise ist dabei der Mitnehmer am Arm im Bereich der Aufnahme, das heißt vorzugsweise am Armkörper im Bereich der Aufnahme, angeordnet.

Um sicherzustellen, daß der Arm den Bewegungen des Werkzeugträgers beispielsweise in der X-Richtung exakt folgt, ist vorzugsweise vorgesehen, daß der Werkzeugträger auf den Mitnehmer mit einem Mitnahmeelement einwirkt, welches eine quer zur X-Richtung verlaufende Mitnahmefläche als Anlagefläche aufweist.

Vorzugsweise verläuft dabei die Mitnahmefläche senkrecht zur X-Richtung.

Darüber hinaus ist vorzugsweise vorgesehen, daß der Werkzeugträger auf den Mitnehmer mit einem Mitnahmeelement einwirkt, welches eine quer zur Z-Richtung verlaufende Mitnahmefläche als Anlagefläche aufweist, wobei auch in diesem Fall die Mitnahmefläche vorzugsweise senkrecht zur Z-Richtung verläuft.

Um den Arm mittels des Werkzeugträgers günstig bewegen zu können, ist vorzugsweise vorgesehen, daß die Stelleinrichtung mit dem Werkzeugträger von der Endstellung weg bewegbar ist, daß heißt, daß die Stelleinrichtung zunächst in ihre Endstellung bewegbar ist, welche der Ausgangsstellung der Funktionseinheit entspricht, und daß dann der Werkzeugträger in der Lage ist, den Arm und somit auch die Stelleinrichtung von der Endstellung weg zu bewegen, wobei in diesem Fall die Stelleinrichtung vorzugsweise eine in linearer Richtung wirkende Stelleinrichtung ist.

Darüber hinaus ist vorgesehen, daß die Stelleinrichtung zur Bewegung der Aufnahme mittels des Werkzeugträgers über die Endstellung hinaus bewegbar ist. Dies ist insbesondere bei einer Schwenkbewegung des Arms mit dem Werkzeugträger der Fall, so daß die Stelleinrichtung zunächst mit ihrer Endstellung die Ausgangsstellung, beispielsweise in X-Richtung, vorgibt und dann der Werkzeugträger die Aufnahme und den Arm über die Endstellung hinaus bewegt.

Zweckmäßigerweise ist dabei die Endstellung der Stelleinrichtung durch ein kraftbeaufschlagtes Anschlagelement festgelegt.

Um stets eine optimale Anlage von Mitnehmer und Mitnahmeelement zu erreichen, ist vorgesehen, daß der Arm mit der Betätigungseinrichtung in der Arbeitsstellung so kraftbeaufschlagbar ist, daß der Mitnehmer an der jeweiligen Mitnahmefläche des Mitnahmeelements in Anlage bleibt, das heißt, daß stets sichergestellt ist, daß die körperliche Verbindung zwischen Mitnehmer und Mitnahmeelement erhalten bleibt und somit der Arm mit der Aufnahme exakt den Bewegungen des Werkzeugträgers folgt. Dagegen hätte beispielsweise ein Abheben des Mitnehmers von der jeweiligen Mitnahmefläche zur Folge, daß die Stellung des Arms und der Aufnahme nicht mehr exakt durch den Werkzeugträger vorgegeben wäre und somit auch nicht mehr exakt festgelegt wäre.

Besonders zweckmäßig ist eine Ausführungsform der Betätigungseinrichtung, welche sicherstellt, daß die Betätigungseinrichtung einer Bewegung des Werkzeugträgers zum Überführen der Funktionseinheit in eine Funktionsstellung entgegenwirkt.

Besonders zweckmäßig ist es dabei, wenn die Betätigungseinrichtung so ausgebildet ist, daß sie stets allen in der Ausgangsstellung beginnenden Bewegungen des vom Werkzeugträger bewegten Arms entgegenwirkt.

Bezüglich der Art und Anordnung der Betätigungseinrichtung ist vorzugsweise vorgesehen, daß die Betätigungseinrichtung auf die Schwenkwelle des Arms wirkt.

Hinsichtlich der Art der Ausbildung der Funktionseinheit sind die unterschiedlichsten Lösungen denkbar.

Ein vorteilhaftes Ausführungsbeispiel einer Funktionseinheit sieht vor, daß die Funktionseinheit als in die Aufnahme einsetzbares Werkzeug ausgebildet ist.

Ein derartiges Werkzeug könnte beispielsweise ein stationär am Arm angeordnetes Werkzeug sein.

Besonders zweckmäßig ist jedoch ein Ausführungsbeispiel, bei welchem die Aufnahme als eine mittels eines Antriebs antreibbare Werkzeugaufnahme für ein rotierend angetriebenes Werkzeug ausgebildet ist und bei welchem die Werkzeugaufnahme in der Arbeitsstellung mit dem Werkzeugträger in Wirkverbindung bringbar ist und somit zur Bearbeitung des Werkstücks mittels des rotierend angetriebenen Werkzeugs durch den Werkzeugträger relativ zur Arbeitsspindel in Richtung mindestens einer der von der X-Achse und der Z-Achse gebildeten Achsen positionierbar ist, das heißt, daß das angetriebene Werkzeug mit mindestens in der X-Achse oder mindestens in der Z-Achse oder mindestens in einer Achse entsprechend einer Kombination beider Achsen durch den Werkzeugträger exakt positionierbar ist.

Der Vorteil dieser erfindungsgemäßen Lösung ist darin zu sehen, daß einerseits die Aufnahme für das rotierend angetriebene Werkzeug separat vom Werkzeugträger an dem Arm gelagert ist und zu der erforderlichen Bearbeitung in den Arbeitsraum bringbar ist, andererseits aber hierfür keine zusätzlichen durch eine Maschinensteuerung steuerbaren Achsen erforderlich sind, da die Positionierung der Werkzeugaufnahme in der Arbeitsstellung durch die ohnehin von der Maschinensteuerung gesteuerten Achsen des Werkzeugträgers erfolgt.

Damit ist einerseits das einfache Maschinenkonzept beibehalten, welches von zwei von der Maschinensteuerung gesteuerten Achsen ausgeht, andererseits aber die Bearbeitung des Werkstücks mit einem rotierend angetriebenen Werkzeug mit hoher Antriebsleistung und/oder großen auf die Werkzeugaufnahme wirkenden Kräften möglich, da bereits der Arm selbst in der Lage ist, einen Teil der bei der Bearbeitung des Werkstücks mittels des rotierend angetriebenen Werkzeugs entstehenden Gegenkräfte aufzunehmen und nicht die gesamten Gegenkräfte ausschließlich auf den Werkzeugträger wirken.

Konstruktiv besonders konsequent ist jedoch eine Ausführungsform, bei welcher die Werkzeugaufnahme in der Arbeitsstellung durch den Werkzeugträger relativ zur Arbeitsspindel in Richtung der X-Achse und der Z-Achse positionierbar ist.

Um in möglichst großem Umfang auf die Werkzeugaufnahme wirkende Gegenkräfte über den Arm aufnehmen zu können, ist vorzugsweise vorgesehen, daß der Arm in der Arbeitsstellung der Werkzeugaufnahme relativ zum Maschinengestell nur insoweit beweglich ist, daß er den Bewegungen des Werkzeugträgers relativ zum Maschinengestell in Richtung der Achsen folgen kann.

Diese Einschränkung der Bewegbarkeit des Arms eröffnet die Möglichkeit, über die anderweitige Festlegung des Arms bereits einen erheblichen Anteil der von dem rotierend angetriebenen Werkzeug auf die Werkzeugaufnahme wirkenden Gegenkräfte bei der Bearbeitung des Werkstücks aufzunehmen.

Besonders günstig lassen sich Kräfte mittels des Arms in der Arbeitsstellung dann aufnehmen, wenn sich der Arm in der Arbeitsstellung der Werkzeugaufnahme mit seiner Längsrichtung quer zu einer Bewegungsbahn einer Rotationsachse des rotierend angetriebenen Werkzeugs bei dessen Zustellung in Richtung des Werkstücks erstreckt.

Um möglichst günstige Bedingungen zur Steuerung und präzisen Position des rotierend angetriebenen Werkzeugs bei der Bearbeitung des Werkstücks zu erhalten, ist vorzugsweise vorgesehen, daß eine Rotationsachse des rotierend angetriebenen Werkzeugs bei einer Bewegung desselben quer zur Spindelachse nahe einer durch die Spindelachse hindurchverlaufenden und zur X-Achse des Werkzeugträgers parallelen Ebene bewegbar ist. Dadurch ist die Geometrie so gewählt, daß keine all zu großen Geometriefehler bei der Übersetzung der Bewegung des Werkzeugträgers in Richtung der X-Achse auf die Bewegung der Werkzeugaufnahme in Richtung des Werkstücks auftreten.

Ferner ist vorzugsweise vorgesehen, daß in der Arbeitsstellung der Werkzeugaufnahme die Rotationsachse des rotierend angetriebenen Werkzeugs parallel zur Spindelachse ausgerichtet ist, um beispielsweise für Gewindefräsen oder Mehrkantdrehen zweckmäßige Geometrieverhältnisse zu erreichen.

Da bei der erfindungsgemäßen Lösung die Wirkverbindung zwischen dem Werkzeugträger und der Werkzeugaufnahme für das rotierend angetriebene Werkzeug lediglich für das Positionieren derselben in der Arbeitsstellung bestehen soll, jedoch nicht in der Ruhestellung, um unabhängig von der Werkzeugaufnahme eine Bearbeitung des Werkstücks mit in dem Werkzeugträger aufgenommenen Werkzeugen durchführen zu können, ist vorzugsweise vorgesehen, daß die Werkzeugaufnahme von der Ruhestellung in eine Bearbeitungsausgangsstellung bewegbar ist, in welcher die Wirkverbindung mit dem Werkzeugträger zur Positionierung desselben herstellbar ist.

Damit ist in einfacher Weise sichergestellt, daß die Wirkverbindung zwischen dem Werkzeugträger und der Werkzeugaufnahme definiert herstellbar ist, jedoch aber auch nach Beendigung der Bearbeitung und vor einem Bewegen der Werkzeugaufnahme in die Ruhestellung in einfacher Weise aufgebbar ist.

Beispielsweise läßt sich die Wirkverbindung in einfacher Weise dadurch aufgeben, daß die Werkzeugaufnahme nach Beendigung der Bearbeitung des Werkstücks in ihre Bearbeitungsausgangsstellung zurückgefahren wird und dann von dieser in die Ruhestellung übergeht.

Vorzugsweise ist die Bearbeitungsausgangsstellung dabei so gewählt, daß in dieser ein Kontakt zwischen dem rotierend angetriebenen Werkzeug und dem Werkstück noch nicht besteht, d. h. in der Bearbeitungsausgangsstellung noch keine Bearbeitung des Werkstücks erfolgen kann, so daß das Überführen der Werkzeugaufnahme von der Ruhestellung in die Bearbeitungsausgangsstellung mit einfachen Mitteln erfolgen kann, ohne daß dabei Rücksicht auf das zu bearbeitende Werkstück genommen werden muß.

Die einzige Randbedingung beim Überführen der Werkzeugaufnahme von der Ruhestellung in die Bearbeitungsausgangsstellung ist die, daß eine Kollision mit dem Werkzeugträger vor Erreichen der Bearbeitungsausgangsstellung vermieden wird.

Um die Wirkverbindung zwischen der Werkzeugaufnahme und dem Werkzeugträger in einfacher Weise herstellen zu können, ist vorzugsweise vorgesehen, daß die Werkzeugaufnahme mit einem Mitnehmer versehen ist, auf welchen bei bestehender Wirkverbindung mit dem Werkzeugträger ein am Werkzeugträger angeordnetes Mitnahmeelement einwirkt.

Mittels eines derartigen Mitnehmers und eines derartigen Mitnahmeelements läßt sich die Wirkverbindung besonders günstig herstellen.

Vorzugsweise ist dabei das Mitnahmeelement in eine Werkzeugposition des Werkzeugträgers auswechselbar eingesetzt.

Dabei ist es insbesondere zweckmäßig, wenn das Mitnahmeelement in der Bearbeitungsausgangsstellung am Mitnehmer zur Anlage bringbar ist, d. h. somit die Wirkverbindung erst in der Bearbeitungsausgangsstellung durch Anlage des Mitnahmeelements am Mitnehmer herstellbar ist.

Besonders vorteilhaft läßt sich die erfindungsgemäße Lösung konstruktiv dann gestalten, wenn der Mitnehmer am Arm im Bereich der Werkzeugaufnahme für das rotierend angetriebene Werkzeug angeordnet ist.

Zweckmäßigerweise läßt sich die Wirkverbindung dadurch herstellen, daß der Werkzeugträger auf den Mitnehmer mit einem Mitnahmeelement einwirkt, welches eine quer zur X-Richtung verlaufende Mitnahmefläche als Anlagefläche aufweist.

Damit ist in einfacher Weise eine in X-Richtung wirksame Wirkverbindung zwischen dem Mitnahmeelement und dem Mitnehmer herstellbar, nämlich dadurch, daß das Mitnahmeelement mit seiner Mitnahmefläche in X-Richtung an den Mitnehmer heranbewegt wird und ab der Beaufschlagung des Mitnehmers durch die Mitnahmefläche in X-Richtung in der Lage ist, die Werkzeugaufnahme für das rotierend angetriebene Werkzeug exakt zu positionieren.

Beispielsweise wäre es dabei im Rahmen der erfindungsgemäßen Lösung denkbar, die Relativbewegung zwischen dem Werkzeugträger und der Arbeitsspindel in Z-Richtung durch Bewegung der Arbeitsspindel zu realisieren, so daß es in diesem Fall nicht erforderlich wäre, den Werkzeugträger mit einer Z-Achse zu versehen und somit auch nicht erforderlich, die Werkzeugaufnahme für das rotierend angetriebene Werkzeug mittels des Werkzeugträgers in Z-Richtung zu positionieren.

Alternativ dazu wäre es aber auch denkbar, die Arbeitsspindel in X-Richtung zu bewegen und somit lediglich eine Positionierbarkeit des Werkzeugträgers in Richtung der Z-Achse vorzusehen.

In diesem Fall ist erfindungsgemäß vorgesehen, daß der Werkzeugträger auf den Mitnehmer mit einem Mitnahmeelement einwirkt, welches eine quer zur Z-Richtung verlaufende Mitnahmefläche als Anlagefläche aufweist, so daß bei Berühren des Mitnehmers durch die Mitnahmefläche eine exakte Positionierung der Werkzeugaufnahme für das rotierend angetriebene Werkzeug in Z-Richtung möglich ist.

Bevorzugt sind Ausführungsformen der erfindungsgemäßen Drehmaschine, bei welchen die Relativbewegung in X-Richtung und in Z-Richtung durch Bewegen des Werkzeugträgers relativ zum Maschinengestell und zur Arbeitsspindel erfolgt. In diesem Fall wirkt dann der Werkzeugträger auf den Mitnehmer mit einem Mitnahmeelement ein, welches sowohl eine quer zur X-Richtung verlaufende als auch eine quer zur Z-Richtung verlaufende Mitnahmefläche aufweist, so daß in beiden Richtungen eine exakte Positionierung der Werkzeugaufnahme für das rotierend angetriebene Werkzeug durch den Werkzeugträger möglich ist.

Um bei Herstellung einer Wirkverbindung zwischen dem Werkzeugträger und der Werkzeugaufnahme für das rotierend angetriebene Werkzeug mittels des Mitnehmers und des Mitnahmeelements insbesondere in jeder Arbeitsstellung eine exakte Positionierung des rotierend angetriebenen Werkzeugs zu erhalten, ist vorzugsweise vorgesehen, daß eine Bearbeitungsbewegung des rotierend angetriebenen Werkzeugs längs der jeweiligen Achse in einer derartigen Richtung erfolgt, daß eine bei der Bearbeitung des Werkstücks auf das rotierend angetriebene Werkzeug wirkende Gegenkraft eine Kraftkomponente aufweist, welche den Mitnehmer in Richtung mindestens einer Mitnahmefläche beaufschlagt, so daß bereits die Gegenkraft bei der Bearbeitung des Werkstücks dafür sorgt, daß der Mitnehmer stets an der jeweiligen Mitnahmefläche in Wirkverbindung bleibt und somit durch Positionierung der Mitnahmefläche seitens des Werkzeugträgers zwingend eine exakte Positionierung der Werkzeugaufnahme für das rotierend angetriebene Werkzeug erfolgt.

Im Zusammenhang mit der Erläuterung der bisherigen Ausführungsbeispiele wurde nicht näher darauf eingegangen, wie die Bewegung des Arms zur Bewegung der Werkzeugaufnahme für das rotierend angetriebene Werkzeug in die Ruhestellung und aus der Ruhestellung heraus erfolgen soll. So sieht eine besonders vorteilhafte Lösung vor, daß der Arm mit mindestens einer Betätigungseinrichtung in die Ruhestellung und aus der Ruhestellung herausbewegbar ist.

Diese Betätigungseinrichtung kann dabei in unterschiedlichster Art und Weise ausgebildet sein.

Eine besonders vorteilhafte Lösung sieht vor, daß die Betätigungseinrichtung mindestens eine Stelleinrichtung umfaßt, die eine die Bearbeitungsausgangsstellung definierende Endstellung aufweist, so daß durch Anfahren der Endstellung der Stelleinrichtung bereits die Bearbeitungsausgangsstellung für die Werkzeugaufnahme für das rotierend angetriebene Werkzeug erreichbar ist.

Um nun ausgehend von dieser Bearbeitungsendstellung jede einzelne Arbeitsstellung anfahren zu können, ist vorzugsweise vorgesehen, daß die Stelleinrichtung zur Durchführung der von der Bearbeitungsausgangsstellung ausgehenden Bearbeitungsbewegung von der Endstellung wegbewegbar ist, so daß durch die Endstellung keinerlei Bewegungseinschränkung für die Bearbeitungsbewegung entsteht.

Alternativ dazu ist es aber auch denkbar, daß die Stelleinrichtung zur Durchführung der Bearbeitungsbewegung über die Endstellung hinausbewegbar ist. In diesem Fall ist vorzugsweise die Endstellung durch ein kraftbeaufschlagtes Anschlagelement festgelegt, so daß auch noch die Möglichkeit besteht, zur Durchführung der Bearbeitungsbewegung die Stelleinrichtung durch Bewegen des kraftbeaufschlagten Anschlagelements über die Endstellung hinauszubewegen, beispielsweise dadurch, daß der Werkzeugträger auf die Werkzeugaufnahme einwirkt.

Die Betätigungseinrichtungen lassen sich zusätzlich aber auch noch dadurch vorteilhaft einsetzen, daß der Arm in der Arbeitsstellung mit mindestens einer Betätigungseinrichtung so kraftbeaufschlagbar ist, daß der Mitnehmer an der jeweiligen Mitnahmefläche des Mitnahmeelements in Anlage bleibt, d. h., daß die Betätigungseinrichtung nicht nur dazu eingesetzt wird, die Bewegung des Arms in die Ruhestellung und aus der Ruhestellung heraus durchzuführen, sondern zusätzlich dazu eingesetzt werden kann, unabhängig davon, ob Gegenkräfte auf das rotierend angetriebene Werkzeug wirken oder nicht, den Mitnehmer stets in Anlage an der jeweiligen Mitnehmerfläche zu halten und somit auch unabhängig von auftretenden Gegenkräften die Werkzeugaufnahme für das rotierend angetriebene Werkzeug in allen anzufahrenden Arbeitsstellungen exakt zu positionieren.

Besonders günstig ist es dabei, wenn die Betätigungseinrichtung stets einer Bearbeitungsbewegung des Werkzeugträgers entgegenwirkt.

Zweckmäßigerweise ist vorgesehen, daß die Betätigungseinrichtung stets allen in der Bearbeitungsausgangsstellung beginnenden Bearbeitungsbewegungen des vom Werkzeugträger bewegten Arms entgegenwirkt.

Hinsichtlich der Anordnung des Antriebsmotors für das rotierend angetriebene Werkzeug wurden bislang keine näheren Angaben gemacht. So sieht ein besonders vorteilhaftes Ausführungsbeispiel vor, daß der Antriebsmotor für das rotierend angetriebene Werkzeug am Arm angeordnet und somit mit den Bewegungen des Arms mitbewegbar ist.

Besonders günstig ist es dabei, wenn der Antriebsmotor so am Arm angeordnet ist, daß er in allen Stellungen des Arms außerhalb des Arbeitsraums angeordnet ist, um möglichst wenig Raum im Arbeitsraum selbst zu blockieren.

Hinsichtlich der Anordnung und Lagerung des Arms wurden bislang keine spezifischen Angaben gemacht. So wäre es im Rahmen der bislang beschriebenen Ausführungsbeispiele denkbar, den Arm an einer Linearbewegungseinheit anzuordnen, die allerdings außerhalb des Arbeitsraums steht und den Arbeitsraum zu keinem Zeitpunkt tangiert.

Ein kinematisch und konstruktiv besonders vorteilhafte Lösung sieht vor, daß der Arm mit einem der Werkzeugaufnahme für das rotierend angetriebene Werkzeug abgewandten Bereich in einem Schwenklager relativ zum Maschinengestell schwenkbar gelagert ist.

Vorzugsweise ist dabei das Schwenklager im Abstand von einer durch die Spindelachse hindurchverlaufenden und zur X-Achse des Werkzeugträgers parallelen Ebene angeordnet, so daß sich der Arm in jeder Arbeitsstellung der Werkzeugaufnahme für das rotierend angetriebene Werkzeug quer zu dieser Ebene erstreckt und somit in vorteilhafter Weise in der Lage ist, bei Bearbeitung des Werkstücks von dem rotierend angetriebenen Werkzeug ausgehende Gegenkräfte aufzunehmen.

Zweckmäßigerweise ist dabei das Schwenklager so ausgebildet, daß eine Schwenkachse desselben parallel zur Spindelachse verläuft.

Um in vorteilhafter Weise eine Bewegbarkeit des Arms in Z-Richtung sicherzustellen, ist vorzugsweise vorgesehen, daß der Arm im Schwenklager in Richtung der Schwenkachse verschieblich gelagert ist und somit das Schwenklager auch eine Linearverschiebung in axialer Richtung zuläßt, um dem Arm die notwendige Beweglichkeit zur Durchführung der Bearbeitungsbewegungen zu verleihen.

Eine besonders günstige Lösung sieht dabei vor, daß der Arm eine das Schwenklager durchsetzende Schwenkwelle aufweist, mit welcher die gewünschten Bewegungen des Arms relativ zum Schwenklager in einfacher Art und Weise realisierbar sind.

Eine konstruktiv besonders günstige Lösung für möglichst wenig Raumbedarf beim Ein- und Ausschwenken der Werkzeugaufnahme für das rotierend angetriebene Werkzeug in den Arbeitsraum sieht vor, daß die Schwenkwelle an einem der Werkzeugaufnahme abgewandten Ende den Antriebsmotor für das rotierend angetriebene Werkzeug trägt.

Im Zusammenhang mit der bisherigen Erläuterung der Realisierung der schwenkbaren Lagerung des Arms wurde nicht näher auf die Anordnung der Betätigungseinrichtung relativ hierzu eingegangen.

So wäre es prinzipiell denkbar, die Betätigungseinrichtung unabhängig von dem Schwenklager anzuordnen.

Eine besonders günstige Lösung sieht jedoch vor, daß die mindestens eine Betätigungseinrichtung auf die Schwenkwelle des Arms wirkt und somit ebenfalls raumsparend relativ zur Werkzeugaufnahme angeordnet werden kann.

Hinsichtlich der Ausbildung der Funktionseinheit wurde bislang lediglich davon ausgegangen, daß diese ein Werkzeug darstellen kann.

Eine andere Möglichkeit, die Funktionseinheit auszubilden, ist die, daß die Funktionseinheit als an der Aufnahme gehaltene Werkstückabstützung ausgebildet ist.

Eine derartige Werkstückabstützung bietet beispielsweise die Möglichkeit, das Werkstück bei der Bearbeitung zusätzlich abzustützen und somit die Zerspanungsleistung zu erhöhen, insbesondere wenn zwei Werkzeuge an dem Werkstück gleichzeitig arbeiten.

Eine besonders günstige Möglichkeit, das Werkstück abzustützen, ist die, daß die Werkstückabstützung als Reitstock ausgebildet ist.

Eine weitere Möglichkeit, die Funktionseinheit auszubilden ist die, daß die Funktionseinheit als an der Aufnahme gehaltene Handhabungseinrichtung ausgebildet ist.

Eine derartige Handhabungseinrichtung bietet eine Vielzahl von Möglichkeiten, beispielsweise ist vorgesehen, daß die Handhabungseinrichtung eine Werkstückhandhabungseinrichtung ist. Es ist aber auch denkbar, die Handhabungseinrichtung als Werkzeughandhabungseinrichtung auszubilden oder als Handhabungseinrichtung, die sowohl in der Lage ist, ein Werkstück oder ein Werkzeug zu handhaben.

Schließlich sieht eine weitere Möglichkeit der erfindungsgemäßen Lösung vor, daß die Funktionseinheit als Meßeinrichtung ausgebildet ist.

Eine derartige Meßeinrichtung ermöglicht vorzugsweise das Werkstück zu vermessen.

Es ist aber auch denkbar, mit der Meßeinrichtung das Werkzeug zu vermessen.

Eine besonders günstige Lösung sieht vor, daß die Meßeinrichtung sowohl eine Werkstückvermeßeinrichtung als auch eine Werkzeugvermeßeinrichtung ist.

Weitere Merkmale und Vorteile der Erfindung sind Gegenstand der nachfolgenden Beschreibung sowie der zeichnerischen Darstellung einiger Ausführungsbeispiele einer erfindungsgemäßen Drehmaschine.

In der Zeichnung zeigen:
- Fig. 1: eine Seitenansicht eines ersten Ausführungsbeispiels einer erfindungsgemäßen Drehmaschine in Richtung des Pfeils A in Fig. 2;
- Fig. 2: einen Schnitt längs Linie 2-2 in Fig. 1;
- Fig. 3: einen Schnitt längs Linie 3-3 in Fig. 2;
- Fig. 4: einen Schnitt durch einen Arm und eine Schwenklagerung für diesen in der Ebene 4-4 in Fig. 2;
- Fig. 5: einen Schnitt längs Linie 5-5 in Fig. 4;
- Fig. 6: eine Seitenansicht eines zweiten Ausführungsbeispiels einer erfindungsgemäßen Drehmaschine in Richtung des Pfeils D in Fig. 7;
- Fig. 7: eine Draufsicht auf das zweite Ausführungsbeispiel gemäß Fig. 6 in Richtung des Pfeils C;
- Fig. 8: einen Schnitt längs Linie 8-8 in Fig. 6 allerdings mit vollständig in Draufsicht dargestellten Revolvern;
- Fig. 9: einen Schnitt ähnlich Fig. 6 durch ein drittes Ausführungsbeispiel einer erfindungsgemäßen Drehmaschine mit Blick in Richtung eines Pfeils D in Fig. 11;
- Fig. 10: eine Ansicht in Richtung des Pfeils E in Fig. 11;
- Fig. 11: eine Ansicht ähnlich Fig. 7 des dritten Ausführungsbeispiels der erfindungsgemäßen Drehmaschine mit Blick in Richtung des Pfeils F in Fig. 9;
- Fig. 12: eine Ansicht ähnlich Fig. 11 eines vierten Ausführungsbeispiels einer erfindungsgemäßen Drehmaschine und
- Fig. 13: eine Ansicht ähnlich Fig. 12 eines fünften Ausführungsbeispiels einer erfindungsgemäßen Drehmaschine.

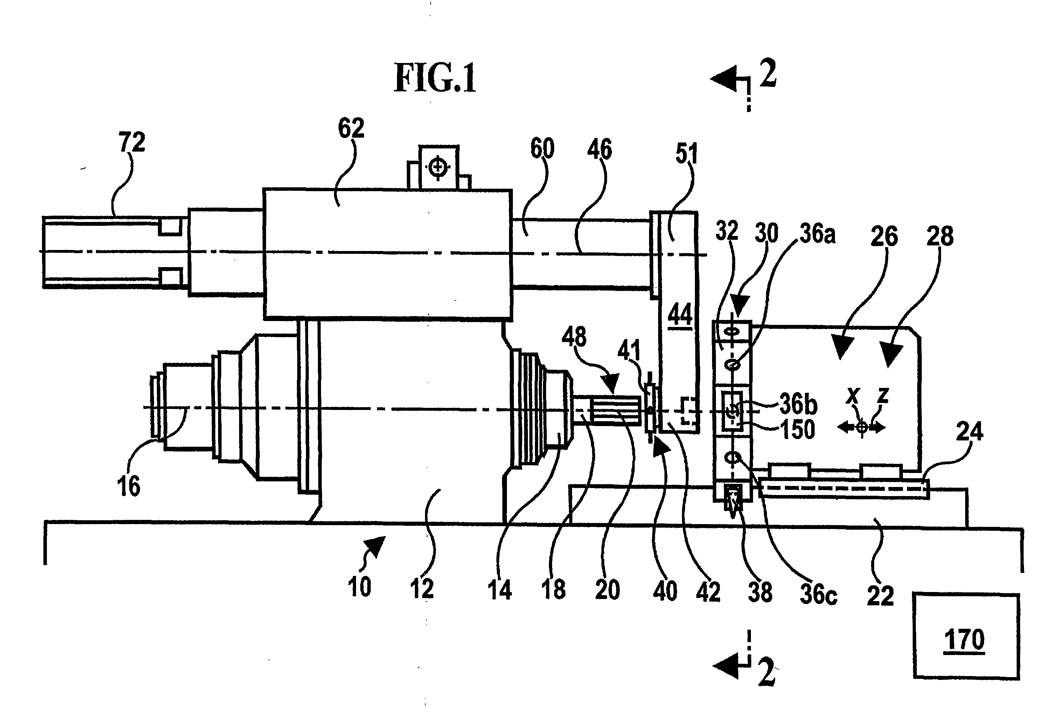

Ein erstes Ausführungsbeispiel einer erfindungsgemäßen Drehmaschine, dargestellt in Fig. 1, umfaßt ein als Ganzes mit 10 bezeichnetes Maschinengestell, auf welchem ein als Ganzes mit 12 bezeichneter Spindelstock angeordnet ist, in welchem eine Arbeitsspindel 14 um eine Spindelachse 16 drehbar gelagert ist.

Die Arbeitsspindel 14 ist mit einem Spannfutter 18 versehen, in welchem ein zu bearbeitendes Werkstück 20 spannbar ist, so daß das Werkstück 20 um die Spindelachse 16 drehbar angetrieben werden kann.

Die Drehmaschine umfaßt ferner noch ein Schlittenbett 22, auf welchem ein parallel zur Spindelachse 16 in Richtung einer Z-Achse gesteuert verfahrbarer Z-Schlitten 24 gehalten ist und einen auf diesem Z-Schlitten 24 angeordneten X-Schlitten 26, welcher in Richtung einer X-Achse senkrecht zur Spindelachse 16 gesteuert bewegbar ist, so daß der Z-Schlitten 24 und der X-Schlitten 26 insgesamt einen als Ganzes mit 28 bezeichneten Kreuzschlitten bilden, welcher in Richtung der X/Z-Achsen verfahrbar ist.

Auf dem Kreuzschlitten 28 ist ein als Ganzes mit 30 bezeichneter Werkzeugträger angeordnet, welcher beispielsweise als Revolver ausgebildet ist und einen Revolverkopf 32 aufweist, der um eine Revolverachse 34, die vorzugsweise parallel zur Spindelachse 16 verläuft, in verschiedene Schaltstellungen schaltbar ist.

Der Revolverkopf 32 weist dabei verschiedene Werkzeugaufnahmen 36 auf, in welche Werkzeuge 38 zur Bearbeitung des Werkstücks 20 einsetzbar sind.

Um nun bei der erfindungsgemäßen Drehmaschine Bearbeitungen des Werkstücks 20 mit einer Funktionseinheit 40 in Form eines einem rotierend angetriebenen Werkzeugs 41 vornehmen zu können, welches eine für hohe Kräfte geeignete Werkzeugaufnahme mit insbesondere außerdem hoher Antriebsleistung benötigt, wie z. B. Gewindefräser oder Messerköpfe zum Mehrkantdrehen, ist eine derartige Werkzeugaufnahme 42, wie in Fig. 1 bis 3 dargestellt, an einem Arm 44 angeordnet, welcher um eine Schwenkachse 46 drehbar ist, die vorzugsweise parallel zur Spindelachse 16 verläuft und im Abstand von einer Ebene E angeordnet ist, die durch die Spindelachse 16 hindurchverläuft und sich parallel zur X-Achse des Werkzeugträgers 30 erstreckt.

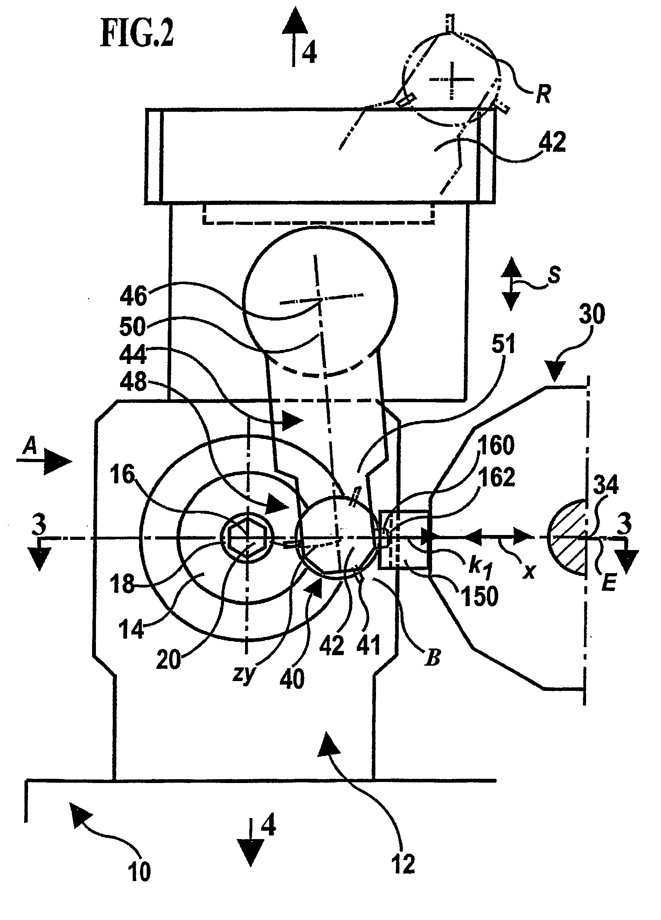

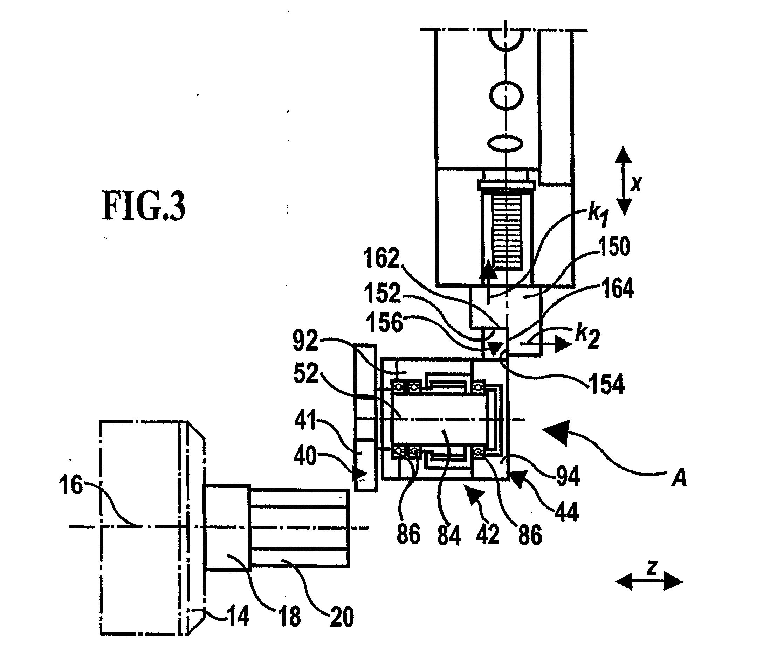

Mit diesem um die Schwenkachse 46 schwenkbaren Arm 44 ist die Aufnahme 42 einerseits außerhalb eines im Bereich des Spannfutters 18 und sich von diesem weg erstreckenden Arbeitsraums 48 in einer Ruhestellung R positionierbar, in welcher, wie in Fig. 2 dargestellt, sich der Arm 42 von der Schwenkachse 46 weg in Richtung einer der Ebene E gegenüberliegenden Seite der Schwenkachse 46 erstreckt und durch eine Schwenkbewegung S in den Arbeitsraum 48 hineinbewegbar, und zwar in eine in Fig. 2 dargestellte Bearbeitungsausgangsstellung B, in welcher das rotierend angetriebene Werkzeug 41 mit Sicherheit außer Eingriff mit dem Werkstück 20 ist, und ausgehend von der Bearbeitungsausgangsstellung B in eine in Fig. 3 dargestellte Arbeitsstellung A, in welcher das rotierend angetriebene Werkzeug 41 so angeordnet ist, daß es mit dem Werkstück 20 in Eingriff bringbar ist oder in Eingriff steht.

Vorzugsweise erstreckt sich ein Armkörper 51 des Arms 44 in der Arbeitsstellung A mit seiner Längsachse 50 derart von der Schwenkachse 46 weg, daß diese Längsachse 50 in der Arbeitsstellung A quer zur Ebene E, näherungsweise senkrecht zu dieser verläuft und außerdem eine Rotationsachse 52 des Werkzeugs 40 nahe der Ebene E liegt und außerdem parallel zur Spindelachse 16 verläuft.

Dabei ist der Arm 44 in der Arbeitsstellung A, welche alle möglichen Positionen des Arms 44 ausgehend von der Bearbeitungsausgangsstellung B betrifft, in welchen eine Bearbeitung des Werkstücks 20 möglich ist, in Richtung quer zur Spindelachse 16 auf das Werkstück 20 zu und in Richtung parallel zur Spindelachse 16, vorzugsweise in Richtung des Spannfutters 18 bewegbar, wobei in diesem Fall das Werkzeug 41 in der Bearbeitungsausgangsstellung B auf einer dem Spannfutter 18 abgewandten Seite des Werkstücks 20 und im Abstand von diesem positioniert ist.

Die Bewegung des Werkzeugs 40 in Richtung parallel zur Spindelachse 16 stellt dabei eine Bewegung längs einer Linearachse dar, auf die nachfolgend noch im einzelnen eingegangen wird, während die Bewegung der Rotationsachse 52 in Richtung quer zur Spindelachse 16 bei genauer Betrachtung eine Bewegung dieser Rotationsachse 52 auf einer Zylinderfläche Z um die Schwenkachse 46 entspricht, die jedoch in allen Arbeitsstellungen lediglich geringfügig von der Ebene E abweichend verläuft.

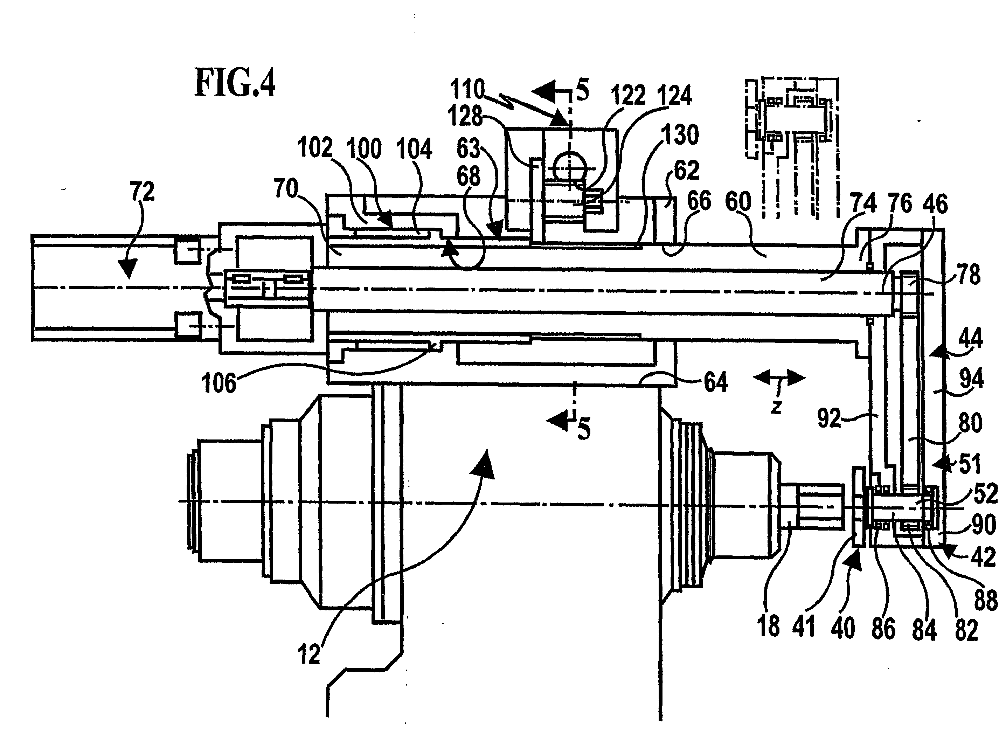

Um eine derartige Bewegbarkeit des Arms 44 zuzulassen, umfaßt der Arm 44, wie in Fig. 4 dargestellt vorzugsweise, eine Schwenkwelle 60, die sich koaxial zur Schwenkachse 46 erstreckt und in einem in einem Lagergehäuse 62 angeordneten Lager 63 gelagert ist, welches vorzugsweise auf dem Spindelstock 12, und zwar auf einer dem Maschinengestell 10 abgewandten Oberseite 64 desselben angeordnet ist.

Das Lagergehäuse 62 lagert die Schwenkwelle 60 in dem Lager 63 mit zwei in Richtung der Schwenkachse 46 im Abstand voneinander angeordneten Dreh-Linearführungen 66 und 68, durch welche die Schwenkwelle 60 sowohl in axialer Richtung zur Schwenkachse 44 gegenüber dem Gehäuse 62 verschiebbar als auch um die Schwenkachse 46 relativ zum Gehäuse 62 drehbar ist.

Ferner trägt die Schwenkwelle 60 an ihrem dem Armkörper 51 gegenüberliegenden Ende 70 einen Motor 72, welcher auf einer dem Armkörper 51 gegenüberliegenden Seite des Gehäuses 62 steht und gemeinsam mit der Schwenkwelle 60 um die Schwenkachse 46 drehbar sowie längs derselben verschiebbar ist.

Der Motor 72 treibt eine in der Schwenkwelle 60 drehbar gelagerte und sich durch diese erstreckende Antriebswelle 74, welche vorzugsweise koaxial zur Schwenkachse 46 verläuft und sich über ein vorderes Ende 76 der Schwenkwelle 60 hinaus in den Armkörper 51 hineinerstreckt und ein in dem Armkörper 51 angeordnetes Antriebsrad 78 trägt, mit welchem beispielsweise über einen Zahnriemen 80 ein Antriebsrad 82 antreibbar ist, das eine Werkzeugantriebswelle 84 treibt, mit welcher das rotierend angetriebene Werkzeug 41 fest verbunden ist.

Die Werkzeugantriebswelle 84 ist dabei koaxial zur Rotationsachse 52 angeordnet und in Richtung der Rotationsachse 52 durch zwei im Abstand angeordnete, vorzugsweise beiderseits des Antriebsrads 82 sitzende Drehlager 86 und 88 in dem die Aufnahme 42 bildenden Endbereich 90 des Arms 44 gelagert.

Der Armkörper 51 ist dabei vorzugsweise durch zwei zusammengesetzte Gehäuseteile 92 und 94 gebildet, welche einerseits die Werkzeugantriebswelle 84 lagern und andererseits den Zahnriemen 80 und das Antriebsrad 78 aufnehmen und dabei außerdem mit dem vorderen Ende 76 der Schwenkwelle 60 verbunden sind.

Zum Verschieben der Schwenkwelle 60 in Richtung der Schwenkachse 46 ist in dem Gehäuse 62 ein axial zur Schwenkwelle 60 ausgerichteter Verschiebezylinder 100 angeordnet, welcher ein Zylindergehäuse 102 aufweist, das sich um die Schwenkwelle 60 herum erstreckt und eine ebenfalls um die Schwenkwelle 60 herum verlaufende Zylinderkammer 104 einschließt, in welcher ein sich radial zur Schwenkwelle 60 erstreckender Kolben 106 in axialer Richtung zur Schwenkachse 46 verschiebbar ist.

Das Zylindergehäuse 102 bildet dabei zwei Anschlagstellungen für den Kolben 106, wobei der Kolben 106 in einer vorderen Anschlagstellung, in welcher der Armkörper 51 den größtmöglichen Abstand vom Spannfutter 18 aufweist, den Arm 44 bezüglich der Bewegung in Richtung parallel zur Z-Achse mit dem rotierend angetriebenen Werkzeug 41 in der Bearbeitungsausgangsstellung B positioniert, während eine hintere Anschlagstellung des Kolbens 106 der Stellung des rotierend angetriebenen Werkzeugs 40 entspricht, in der dieses nächstliegend zum Spannfutter 18 positioniert ist.

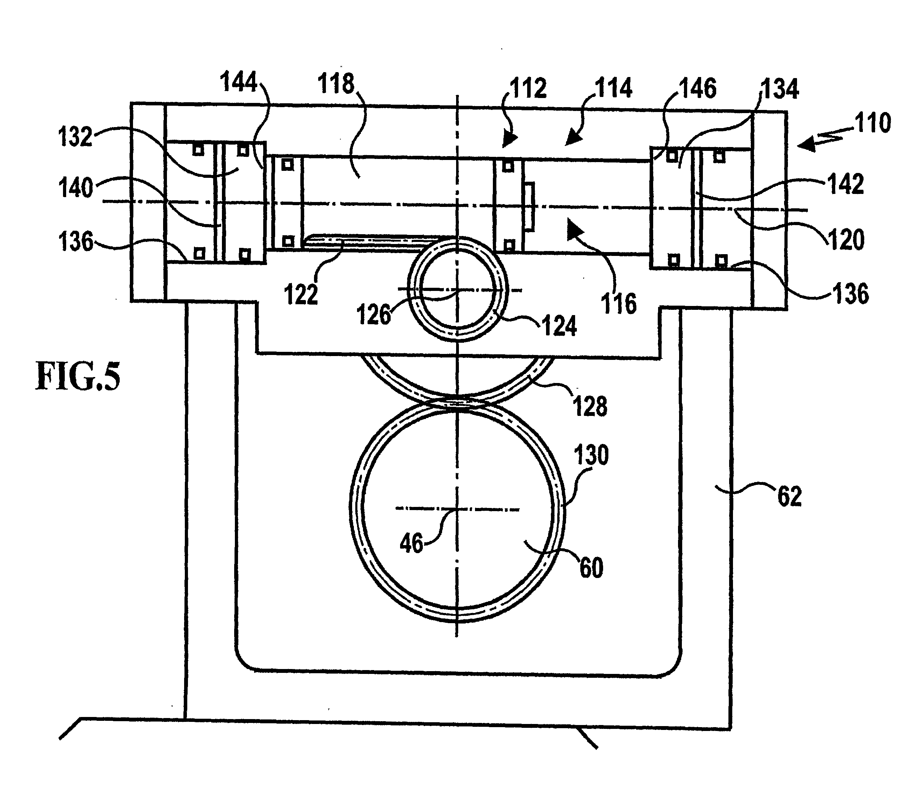

Zusätzlich zur Verschiebbarkeit der Schwenkwelle 60 in axialer Richtung zur Schwenkachse 46 ist, wie in Fig. 5 dargestellt, noch ein als Ganzes mit 110 bezeichneter Schwenkantrieb vorgesehen, welcher einen sich quer zur Schwenkachse 46 erstreckenden Stellzylinder 112 umfaßt, der ein Zylindergehäuse 114 aufweist, welches seinerseits eine Zylinderkammer 116 einschließt, in welcher ein Stellkolben 118 in Richtung einer Längsachse 120 des Zylindergehäuses 114 verschiebbar ist.

Der Stellkolben 118 ist dabei mit einer sich quer zur Längsachse 120 und parallel zur Schwenkachse 46 erstreckenden Verzahnung 122 versehen, die mit einem ersten Zwischenzahnrad 124 in Eingriff steht, das um eine zur Schwenkachse 46 verlaufende Achse 126 drehbar ist und fest mit einem zweiten, jedoch einen größeren Durchmesser aufweisenden Zwischenzahnrad 128 verbunden ist, das in eine umfangsseitige Außenverzahnung 130 der Schwenkwelle 60 eingreift.

Durch lineare Verschiebung des Stellkolbens 118 ist somit, wie in Fig. 5 dargestellt, über die Zwischenzahnräder 124 und 126 eine Schwenkbewegung der Schwenkwelle 60 erzeugbar.

Dabei hat die Außenverzahnung 130 eine derartige Ausdehnung, daß der Kolben 106 des Verschiebezylinders 100 zwischen seinen beiden Anschlagstellungen bewegbar ist, ohne daß das Zwischenzahnrad 128 und die Außenverzahnung 130 außer Eingriff kommen.

Die Bewegung des Stellkolbens 118 in Richtung der Längsachse 120 des Zylindergehäuses 114 ist nun durch zwei Anschlagkörper 132 und 134 begrenzt, wobei bei Anliegen des Stellkolbens 118 am Anschlagkörper 132 die Aufnahme 42 mit dem rotierend angetriebenen Werkzeug 41 in der Bearbeitungsausgangsstellung steht, während bei Anliegen des Stellkolbens 118 an dem Anschlagkörper 134 die Aufnahme 42 mit dem rotierend angetriebenen Werkzeug 41 in der Ruhestellung R steht.

Da ausgehend von der Bearbeitungsausgangsstellung B noch ein weiteres Verschwenken des Arms 44 in Richtung der Spindelachse 16 möglich sein muß, um das rotierend angetriebene Werkzeug in seine Arbeitsstellung A zu bringen, ist noch eine weitere Schwenkbewegung des Arms 44 in derselben Richtung erforderlich, in welcher die Schwenkbewegung von der Ruhestellung R in die Bearbeitungsausgangsstellung B erfolgt ist.

Aus diesem Grund sind die Anschlagkörper 132 und 134 keine Festanschläge, sondern als Kolben ausgebildet, welche in sich beiderseits an die Zylinderkammer 116 anschließenden Zylinderkammern 136 und 138 im Zylindergehäuse 114 angeordnet sind und mit ihren der Zylinderkammer 116 abgewandten Seiten jeweils selbst Druckkammern 140 und 142 begrenzen, die ebenfalls mit Hydraulikmedium, beispielsweise Hydraulikmedium konstanten Drucks, beaufschlagt sind.

Vorzugsweise sind die Kolbenflächen der als Kolben ausgebildeten Anschlagkörper 132 und 134 größer als Kolbenflächen des Stellkolbens 118, so daß das zur Verschiebung des Stellkolbens 118 vorgesehene Hydraulikmedium ebenfalls in die Druckkammern 140 und 142 eingespeist werden kann und diese stets mit dem konstanten Druck beaufschlagt sind.

Dies hat zur Folge, daß dadurch die Anschlagkörper 130 und 132 stets die Tendenz haben, ich an im Zylindergehäuse 114 vorgesehenen Anschlagschultern 144 und 146 anzulegen, die somit die Anschlagstellung der Anschlagkörper 132 und 134 für den Stellkolben 118 definieren.

Diese Anschlagstellung wird nur dann vom Stellkolben 118 überlaufen, wenn der Stellkolben 118 gegen einen der Anschlagkörper 132 und 134 wirkt und mit noch größerer Kraft als der ihm durch Beaufschlagung seiner Kolbenfläche zur Verfügung stehenden Kraft gegen die Anschlagkörper 132 und 134 wirkt und somit diese unter Verkleinerung des Volumens der Druckkammern 140 und 142 verschiebt.

Somit besteht bei Erreichen der Bearbeitungsausgangsstellung B seitens des Arms 44 und des rotierend angetriebenen Werkzeugs 40 die Möglichkeit, den Arm 44 mit der Aufnahme 42 weiter in Richtung der Spindelachse 16 zu schwenken, nämlich dadurch, daß der zunächst zur Definierung der Bearbeitungsausgangsstellung an dem Anschlagkörper 132 anliegende Stellkolben 118 den Anschlagkörper 132 von der Anschlagschulter 144 abhebt und unter Verkleinerung der Druckkammer 140 von dieser wegbewegt.

Bei der bisherigen Erläuterung der erfindungsgemäßen Lösung wurde lediglich erläutert, wie mittels des Schwenkantriebs 110 und des Verschiebezylinders 100 die Bearbeitungsausgangsstellung B der Aufnahme 42 und des rotierend angetriebenen Werkzeugs 40 erreichbar ist.

Erfindungsgemäß erfolgt nun ein Übergang der Aufnahme 42 mit dem rotierend angetriebenen Werkzeug 41 ausgehend von der Bearbeitungsstellung B in die Arbeitsstellung A dadurch, daß die Position des rotierend angetriebenen Werkzeugs 40 in der Arbeitsstellung durch den Werkzeugträger 30 vorgegeben wird.

Hierzu ist der Revolverkopf 32, wie in Fig. 2 und 3 dargestellt, mit einem Mitnahmeelement 150 versehen, welches, wie in Fig. 1 dargestellt, lösbar in eine Werkzeugaufnahme 36, beispielsweise die Werkzeugaufnahme 36b am Revolverkopf 32, eingesetzt ist.

Dieses Mitnahmeelement 150 weist eine erste der Aufnahme 42 zugewandte Mitnahmefläche 152 auf, welche quer zur X-Richtung verläuft, vorzugsweise senkrecht zu dieser verläuft, und eine zweite Mitnahmefläche 154, welche quer zur Z-Richtung, vorzugsweise senkrecht zu dieser, verläuft.

Zweckmäßigerweise ist dabei die Mitnahmefläche 154 dem Spannfutter 18 zugewandt, sie kann jedoch aber auch diesem abgewandt ausgebildet sein.

Die beiden Mitnahmeflächen 152 und 154 sind dabei so angeordnet, daß sie sich schneiden und insgesamt eine Mitnahmewinkelfläche 156 bilden.

Diese Mitnahmewinkelfläche 156 ist nun an einen Mitnehmer 160 anlegbar, der im Bereich der Aufnahme 42 an dem Arm 44 angeordnet ist und seinerseits eine quer zur X-Achse verlaufende erste Mitnehmerfläche 162 aufweist, die vorzugsweise konvex gewölbt ist, und außerdem eine zweite Mitnehmerfläche 164, welche quer zur Z-Achse, vorzugsweise senkrecht zu dieser verläuft.

Die beiden Mitnehmerflächen 162 und 164 sind nun an den entsprechenden Mitnahmeflächen 152 und 154 zur Anlage bringbar, wobei bei in der Bearbeitungsausgangsstellung B stehendem Arm 44 der Werkzeugträger 30 mit dem Revolverkopf 32 das Mitnahmeelement 150 an den Mitnehmer 160 heranführt, um die erste Mitnahmefläche 152 und die zweite Mitnahmefläche 154 an der ersten Mitnehmerfläche 162 und der zweiten Mitnehmerfläche 164 anzulegen.

Ausgehend von dieser Bearbeitungsausgangsstellung B ist nun die Position der Aufnahme 42, und somit des rotierend angetriebenen Werkzeugs 40, durch eine die Positionen des Werkzeugträgers 30 definierende Maschinensteuerung 170 relativ zum Werkstück 20 vorgebbar und damit läßt sich das rotierend angetriebene Werkzeug 41 relativ zum Werkstück 20 exakt positionieren und in alle erwünschten Arbeitsstellungen relativ zum Werkstück 20 bringen.

Bei dem Anfahren jeder einzelnen Arbeitsstellung A ausgehend von der Bearbeitungsausgangsstellung B erfolgt nun einerseits ein Verschieben des Arms 44 in Richtung des Spannfutters 18 und somit auch ein Verschieben der Schwenkwelle 60 dergestalt, daß sich der Kolben 106 des Verschiebezylinders 100 von der vorderen Anschlagstellung weg bewegt.

Wird dabei nach wie vor die Zylinderkammer 104 mit unter Druck stehendem Hydraulikmedium beaufschlagt, so wirkt der Verschiebezylinder 100 gegen die von dem Werkzeugträger 30 und dem Mitnahmeelement 150 vorgesehene Bewegung und hält folglich die erste Mitnehmerfläche 162 des Mitnehmers 160 in Anlage an der zweiten Mitnahmefläche 154 des Mitnahmeelements, wobei die Kraft, mit der der Verschiebezylinder 100 der Bewegung des Mitnahmeelements 150 entgegenwirkt, geringer sein muß als die von dem Mitnahmeelement 150 aufgebrachte Kraft.

In gleicher Weise erfolgt eine Bewegung des rotierend angetriebenen Werkzeugs 40 in Richtung der Spindelachse 16 dadurch, daß - wie bereits erwähnt - der Stellkolben 118 gegen den Anschlagkörper 132 wirkt und somit den Anschlagkörper 132 von seiner Anschlagschulter 144 im Zylindergehäuse 114 wegbewegt, so daß der Anschlagkörper 132 der Bewegung des rotierend angetriebenen Werkzeugs 40 in Richtung quer zur Spindelachse 16 entgegenwirkt.

Dadurch wird die erste Mitnehmerfläche 162 an der ersten Mitnahmefläche 152 des Mitnahmeelements 150 in Anlage gehalten, wobei das Mitnahmeelement 150, um die jeweilige Arbeitsstellung A zu erreichen, mit einer größeren Kraft auf den Mitnehmer 160 einwirken muß, als die Kraft, mit welcher der Mitnehmer 160 durch den Anschlagkörper 132 in Richtung des Mitnahmeelements 150 beaufschlagt ist.

Somit wird durch den Verschiebezylinder 100 und den Schwenkantrieb 110 in jeder Arbeitsstellung A, die mittels des vom Werkzeugträger 30 bewegten Mitnahmeelements 150 ausgehend von der Bearbeitungsausgangsstellung B anfahrbar ist, eine exakte Positionierung des rotierend angetriebenen Werkzeugs 40 relativ zum Werkstück 20 erreicht.

Darüber hinaus wird bei der erfindungsgemäßen Lösung die Lage der Bearbeitungsausgangsstellung B so gewählt, daß die bei Bearbeitung des Werkstücks 20 in den Arbeitsstellungen A durch das rotierend angetriebene Werkzeug 41 auf das rotierend angetriebene Werkzeug 41 wirkenden Gegenkräfte Kraftkomponenten K1 und K2 aufweisen, welche ebenfalls die Mitnehmerflächen 162 und 164 an den Mitnahmeflächen 152 und 154 des Mitnahmeelements 150 in Anlage halten.

Ferner wird zum Antrieb des rotierend angetriebenen Werkzeugs 40 von der Maschinensteuerung 170 der Motor 72 angetrieben, welcher über die Antriebswelle 74, die Antriebsräder 78 und 82 und den Zahnriemen 80 die Werkzeugantriebswelle 84 mit der gewünschten Drehzahl und der gegebenenfalls zur Verfügung stehenden hohen Leistung antreibt.

Um beispielsweise am Werkstück 20 ein Mehrkantdrehen durchführen zu können, wird seitens der Maschinensteuerung 170 die Drehbewegung des Motors 72 mit der der Arbeitsspindel 14 unter Bildung eines elektronischen Getriebes starr korreliert, so daß stets die gewünschten Drehzahlverhältnisse zwischen der Werkzeugantriebswelle 84 und der Arbeitsspindel 14 vorliegen, beispielsweise sind für das Gewindefräsen Drehzahlverhältnisse von 1:1 vorzusehen, für das Mehrkantdrehen üblicherweise Drehzahlverhältnisse von 1:2, wobei jedes andere Drehzahlverhältnis ebenfalls durch die Maschinensteuerung 170 einstellbar ist.

Nach Beendigung der Bearbeitung des Werkstücks 20 wird der Werkstückträger in X-Richtung so weit von der Spindelachse 16 weg bewegt, daß die Aufnahme 42 und das rotierend angetriebene Werkzeug 41 sich so weit von dem Werkstück 20 entfernen, wie dies erforderlich ist, um den Anschlagkörper 132 wieder an den Anschlagschultern 144 anzulegen und somit die Anschlagstellung des Kolbens 118, welche der Bearbeitungsausgangsstellung B entspricht, wieder herzustellen.

Es besteht nun die Möglichkeit, die Zylinderkammer 104 des Verstellzylinders 100 drucklos zu setzen und den Kolben 106 in der Stellung, in welcher er nach Beendigung der Bearbeitung des Werkstücks 20 steht, stehen zu lassen und lediglich durch Betätigen des Schwenkantriebs 110 die Aufnahme 42 mit dem rotierend angetriebenen Werkzeug 41 in die Ruhestellung R zu verschwenken und bei Erreichen der Ruhestellung die Zylinderkammer 104 wieder zu beaufschlagen und den Kolben 106 in seine vordere Anschlagstellung zu bewegen.

Es besteht aber andererseits auch die Möglichkeit, die Druckbeaufschlagung der Zylinderkammer 104 aufrechtzuerhalten, so daß zusätzlich zur Bewegung des Werkzeugträgers 30 in X-Richtung vom Werkstück 20 weg auch noch ein Verfahren des Werkzeugträgers 30 in Z-Richtung in Richtung der Bearbeitungsausgangsstellung B zu erfolgen hat und erst in der Bearbeitungsausgangsstellung B wieder ein Lösen der Wirkverbindung zwischen dem Mitnehmer 160 und dem Mitnahmeelement 150 erfolgt und nach Lösen dieser Wirkverbindung dann durch Betätigen des Schwenkantriebs 110 ein Verschwenken des rotierend angetriebenen Werkzeugs 40 und der Aufnahme 42 von der Bearbeitungsausgangsstellung B in die Ruhestellung R erfolgt.

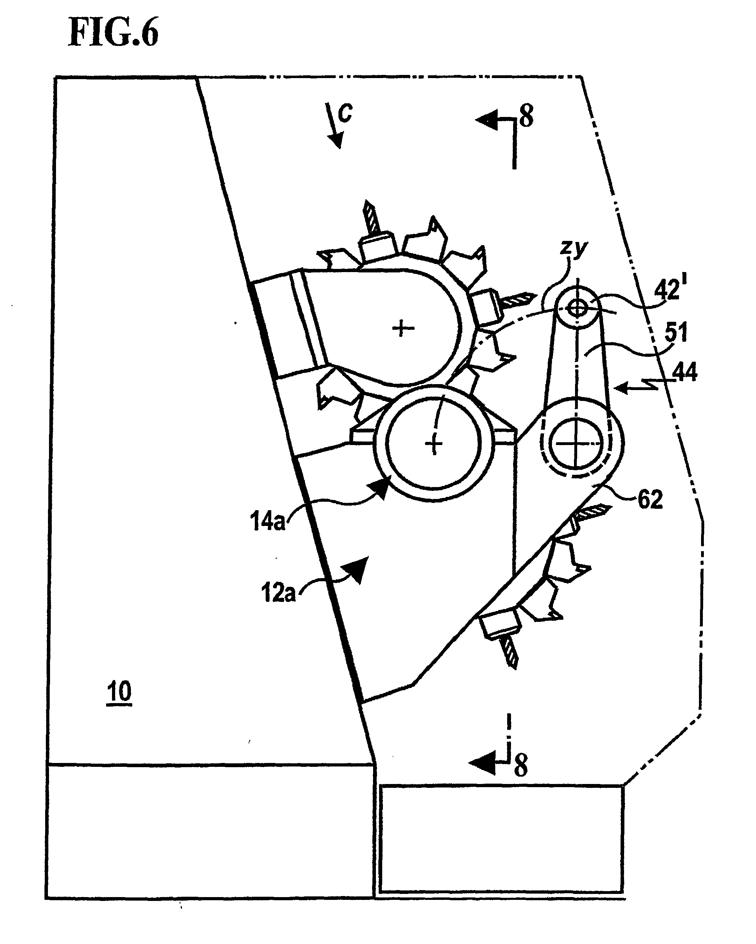

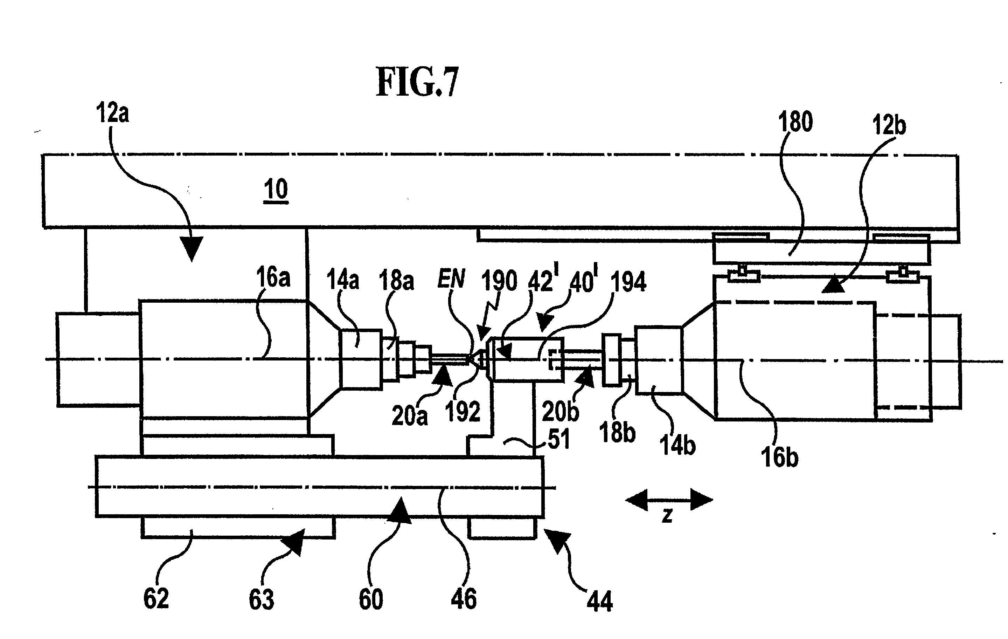

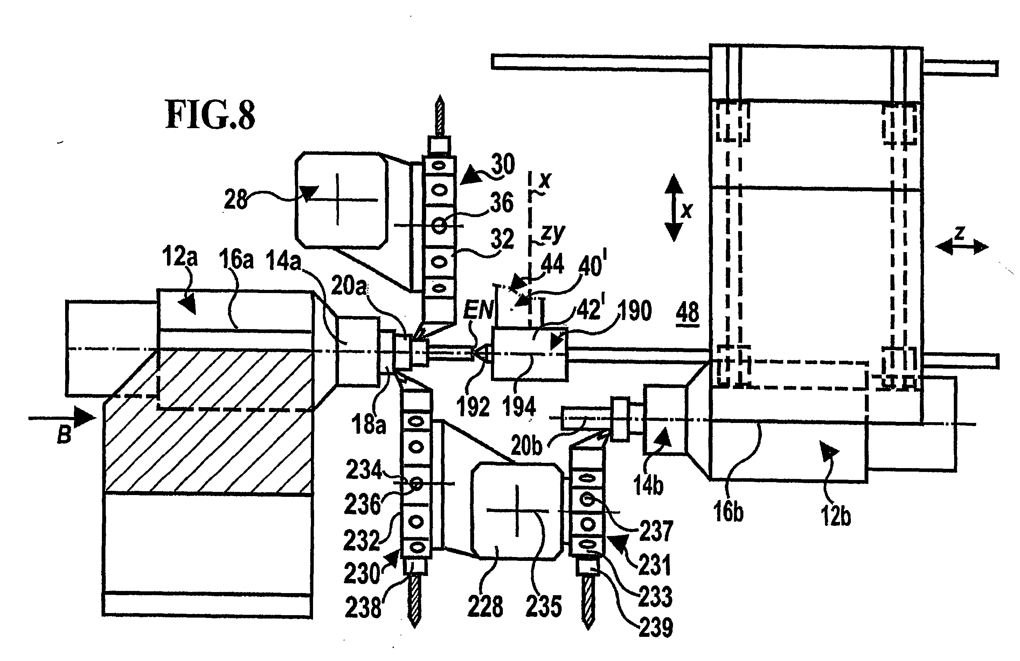

Bei einem zweiten Ausführungsbeispiel einer erfindungsgemäßen Drehmaschine, dargestellt in den Fig. 6 bis 8 sitzen auf dem Maschinengestell 10, und zwar einander gegenüberliegend, zwei Spindelstöcke 12a und 12b, wobei der Spindelstock 12a stationär auf dem Maschinengestell angeordnet ist, während der Spindelstock 12b auf einem Kreuzschlitten 180 und ist gegenüber dem Maschinengestell 10 sowohl in Richtung einer Z-Richtung parallel zur Spindelachse 16a der Arbeitsspindel 14a bewegbar und in einer X-Richtung quer zur Spindelachse 16a.

In jedem der Spindelstöcke 12a und 12b ist die jeweilige Arbeitsspindel 14a bzw. 14b um die Spindelachse 16a bzw. 16b drehbar gelagert und außerdem weist jede der Arbeitsspindeln 14a bzw. 14b ein Spannfutter 18a bzw. 18b zur Aufnahme eines Werkstücks 20a bzw. 20b auf.

Außerdem ist auf dem Kreuzschlitten 28 der Werkzeugträger 30 auf einer Seite der Spindelachse 16a angeordnet, während auf der gegenüberliegenden Seite auf einem Kreuzschlitten 228 zwei Werkzeugträger, nämlich ein Werkzeugträger 230 und diesem gegenüberliegend ein Werkzeugträger 231 angeordnet, die beide Werkzeugaufnahmen 236 bzw. 237 für Werkzeuge 238 bzw. 239 aufweisen, die vorzugsweise in gleicher Weise ausgebildet sind wie die Werkzeugaufnahmen 36 für Werkzeuge 38 in dem Revolverkopf 32 des Werkzeugträgers 30.

Vorzugsweise weisen die Werkzeugträger 230 und 231 ebenfalls Revolverköpfe 232 bzw. 233 auf, die um Revolverachsen 234 bzw. 235 in verschiedene Schaltstellungen schaltbar sind.

Vorzugsweise ist dabei an dem Werkzeugträger 228 der Werkzeugträger 230 so angeordnet, daß er in der Lage ist, das Werkstück 20a zu bearbeiten, während der Werkzeugträger 231 so angeordnet ist, daß er in der Lage ist, das Werkzeug 20b zu bearbeiten, wobei allerdings in diesem Fall der Spindelstock 12b mittels des Kreuzschlittens 180 relativ zum Werkzeugträger 231 verfahren werden muß, wie dies beispielsweise in der deutschen Patentanmeldung 100 40 242.0 beschrieben ist.

Um das in dem Spannfutter 18a der Arbeitsspindel 14a gehaltene erste Werkstück 20a während der Bearbeitung beispielsweise mit den Werkzeugträgern 30 und 230 zusätzlich abstützen zu können, ist als Funktionseinheit 40' ein als Ganzes mit 190 bezeichneter Reitstock vorgesehen, der eine Aufnahmespitze 192 umfaßt, die in der Aufnahme 42' des Arms 44 um eine Achse 194 drehbar gelagert ist und dabei ein im Spannfutter 18a abgewandtes Ende EN des Werkstücks 20a aufnimmt und dieses dabei abstützt.

Der Arm 44 umfaßt dabei in gleicher Weise, wie im Zusammenhang mit dem ersten Ausführungsbeispiel beschrieben, einen Armkörperträger 60, beispielsweise ausgebildet als Schwenkwelle, der den Armkörper 51 trägt, welcher seinerseits wiederum mit der Aufnahme 42' für den Reitstock 190 versehen ist.

Der Armkörperträger 60 ist ferner in gleicher Weise wie im Zusammenhang mit dem ersten Ausführungsbeispiel beschrieben, in dem Lagergehäuse 62 mittels des Lagers 63 um die Schwenkachse 46 drehbar und in Z-Richtung verschiebbar gelagert und dabei beispielsweise durch den Verschiebezylinder 100 und in Z-Richtung bewegbar und durch den mit 110 bezeichneten Schwenkantrieb um die Schwenkachse 46 schwenkbar, so daß die Aufnahme 42' auf der Zylinderfläche ZY in X-Richtung quer zur Spindelachse 16a bewegbar ist.

Damit besteht bei dieser Lösung in einfacher Weise die Möglichkeit, das erste Werkstück 20a bei der Bearbeitung durch den Reitstock 190 abzustützen.

Außerdem besteht jedoch die Möglichkeit, den Reitstock 190 dann aus dem Arbeitsraum 48 zu entfernen, wenn eine Übergabe des Werkstücks 20a von der Arbeitsspindel 14a in die Arbeitsspindel 14b durch koaxiale Ausrichtung der Spindelachsen 16a und b zueinander und bewegen der Arbeitsspindel 14b in Z-Richtung erfolgen soll.

Im übrigen ist das zweite Ausführungsbeispiel der erfindungsgemäßen Drehmaschine in gleicher Weise ausgebildet wie das erste Ausführungsbeispiel, so daß auf die Beschreibung desselben Bezug genommen wird.

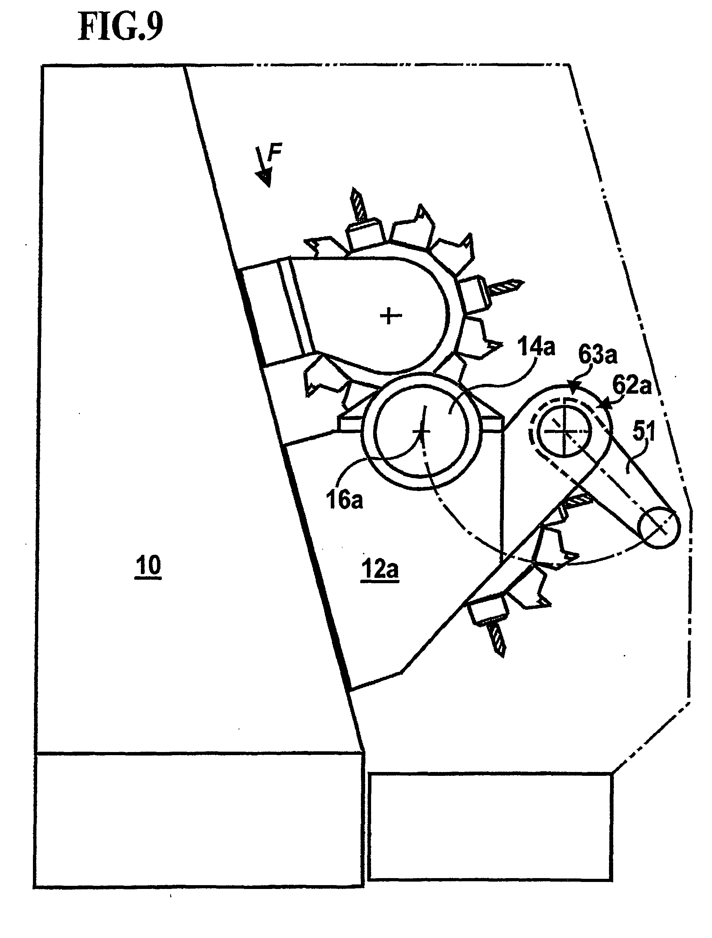

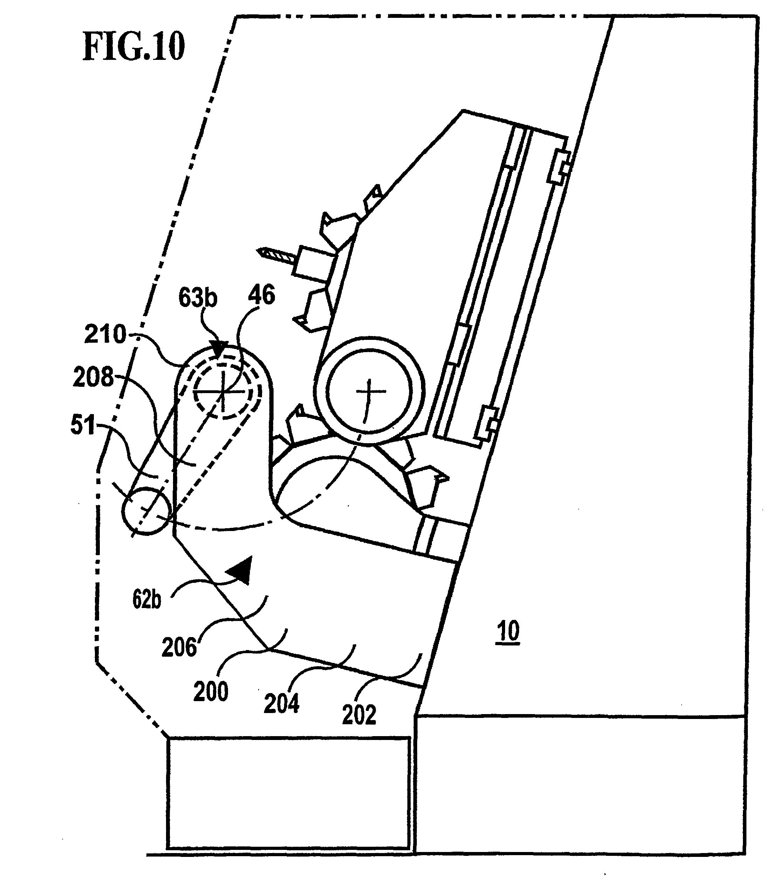

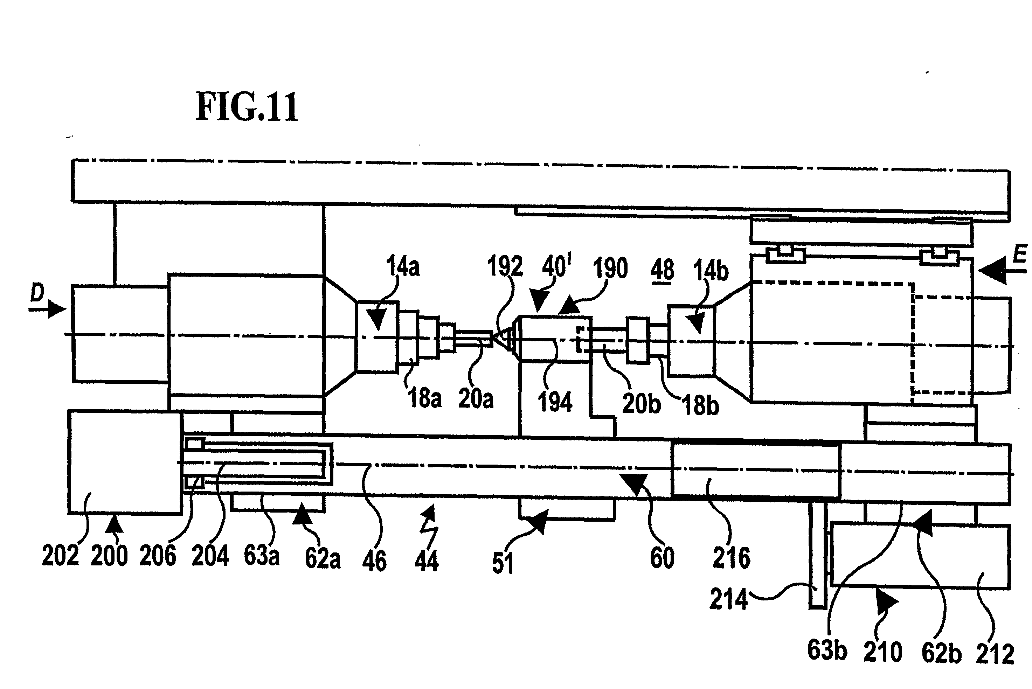

Bei einem dritten Ausführungsbeispiel einer erfindungsgemäßen Drehmaschine, dargestellt in den Fig. 9 bis 11 ist im Gegensatz zum zweiten Ausführungsbeispiel der Armkörperträger 60 nicht in nur einem Lager 63 innerhalb des Lagergehäuses 62 gelagert, sondern auf gegenüberliegenden Seiten in zwei Lagergehäusen 62a und 62b mit zwei Lagern 63a, b, wobei das Lagergehäuse 62a in gleicher Weise wie beim zweiten Ausführungsbeispiel auf dem Spindelstock 12a sitzt, während das Lagergehäuse 62b, wie in Fig. 10 und 11 dargestellt, einen Fuß 200 aufweist, welcher mit einem Ende 202 unmittelbar auf dem Maschinengestell 10 aufsitzt und sich von dem Ende 202 ausgehend zunächst mit einem Grundbereich 204 von dem Maschinengestell 10 weg erstreckt, dann in Form eines Bogenbereichs 206 in einen sich quer zum Grundbereich 204 erstreckenden abgewinkelten Bereich 208 übergeht, der dann an seinem dem Bogenbereich 206 abgewandten Ende 210 das Lager 63b für den Armkörperträger 60, der sich in diesem Fall vom Lager 63a zum Lager 63b erstreckt und beispielsweise in einem mittigen Bereich den Armkörper 51 mit dem Reitstock 190 trägt.

Durch die abgewinkelte Ausführung des Fußes 200 des Lagergehäuses 62b besteht die Möglichkeit, die Schwenkachse 46 für den Arm 44 auf der dem Maschinengestell 10 gegenüberliegenden Seite des Arbeitsraums 48 zu positionieren und dabei trotzdem die Möglichkeit zu schaffen, mit der Spindel 14b soweit zu verfahren, daß diese zwischen dem Lager 63b und dem Maschinengestell 10 positionierbar ist.

Die Bewegungen des Arms 44 werden bei diesem Ausführungsbeispiel durch eine Betätigungsvorrichtung erzeugt, welche einen durch die Maschinensteuerung 170 positionsgenau ansteuerbaren Vorschubantrieb 200 erfolgt, welcher einen auf dem Spindelstock 12a angeordneten Antriebsmotor 202 und eine von diesem antreibbare Spindel 204 umfaßt, die in den Armkörperträger 60 eingreift und eine in diesem vorgesehene Spindelmutter 206 durchsetzt, so daß durch diesen Vorschubantrieb 200 der gesamte Arm 44 in Richtung von dessen Schwenkachse 46 bewegbar ist.

Ferner ist der Arm 44 durch einen durch die Maschinensteuerung 170 drehpositionsgenau ansteuerbaren Schwenkantrieb 210 schwenkbar, welcher einem an dem Lagergehäuse 62b angeordneten Antriebsmotor 212 sowie ein Antriebsritzel 214 umfaßt, das mit einer Verzahnung 216 des Armkörperträgers 60 stets in Eingriff steht, unabhängig von der Position in Richtung von dessen Schwenkachse 46, vorgegeben durch den Vorschubantrieb 200.

Im übrigen ist das dritte Ausführungsbeispiel der erfindungsgemäßen Drehmaschine in gleicher Weise ausgebildet wie das erste Ausführungsbeispiel, so daß auf die Beschreibung desselben Bezug genommen wird.

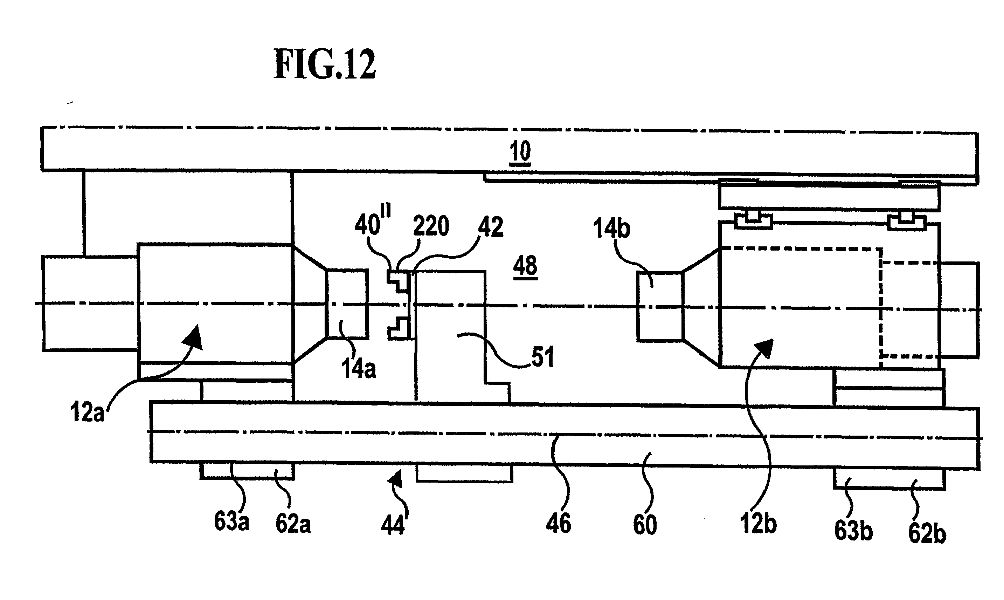

Bei einem vierten Ausführungsbeispiel einer erfindungsgemäßen Drehmaschine, dargestellt in Fig. 12, ist am Armkörper 51 in der Aufnahme 42 kein Reitstock 190 und auch keine rotierend angetriebene Werkzeug 41 gehalten, sondern ein Greifer 220 als Funktionseinheit 40" vorgesehen, mit welchem Werkstücke 20 beispielsweise in der Spindel 14a einsetzbar oder aus dieser entnehmbar sind.

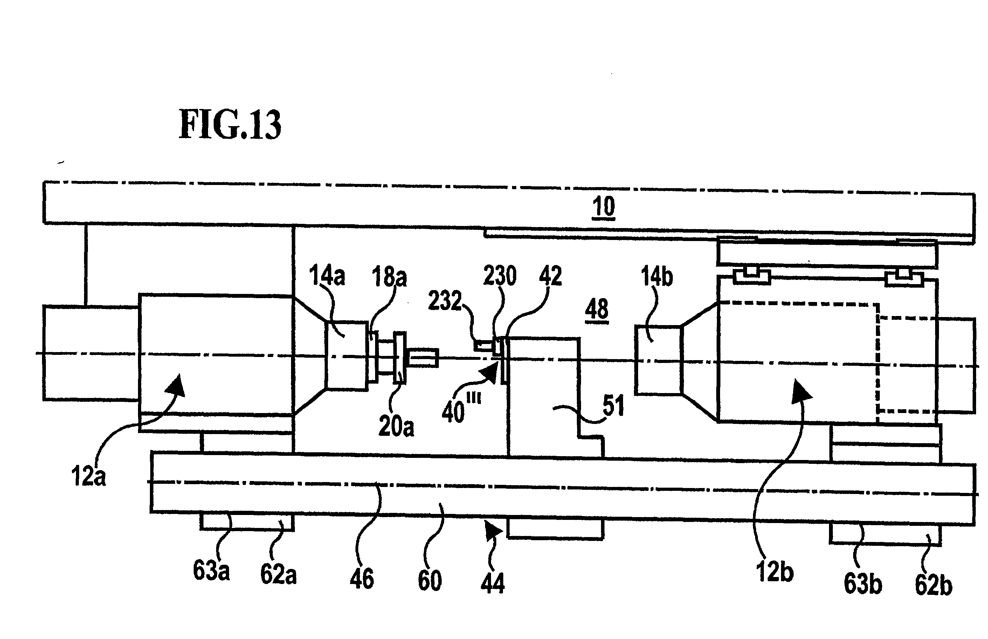

Bei einem fünften Ausführungsbeispiel einer erfindungsgemäßen Drehmaschine, dargestellt in Fig. 13, ist in die Aufnahme 42 als Funktionseinheit 40"' eine Werkstückvermeßeinrichtung 230 eingesetzt, welche einen Taster 232 aufweist, mit welchem das Werkstück 20a in der ersten Arbeitsspindel 14a vermessen werden kann.

Dabei wird ebenfalls der Arm 44 zum Vermessen des Werkstücks 20 eingeschwenkt um die Werkstückvermesseinrichtung 230 in Position zu bringen und mit dieser das Werkstück 20a abzutasten und anschließend wieder aus dem Arbeitsraum 48 ausgeschwenkt.

Im übrigen ist das vierte Ausführungsbeispiel der erfindungsgemäßen Drehmaschine in gleicher Weise ausgebildet wie das erste und dritte Ausführungsbeispiel, so daß auf die Beschreibung desselben Bezug genommen wird.

## Patentansprüche

1. Drehmaschine umfassend ein Maschinengestell (10), eine am Maschinengestell (10) angeordnete Arbeitsspindel (14) zur Aufnahme eines Werkstücks (20), einen am Maschinengestell (10) angeordneten Werkzeugträger (30) zur Aufnahme eines Werkzeugs (38), und einen Arbeitsraum (48) in welchem mittels des Werkzeugs (38) eine Bearbeitung des Werkstücks (20) durch eine Relativbewegung zwischen dem Werkzeugträger (30) und der Arbeitsspindel (14) in Richtung einer X-Achse und einer Z-Achse durchführbar ist, einen an dem Maschinengestell (10) gelagerten Arm (44), welcher von einer außerhalb des Arbeitsraums (48) liegenden Ruhestellung (R) in mindestens eine im Arbeitsraum (48) liegende Arbeltsstellung (A) bewegbar ist und eine am Arm (44) vorgesehene Aufnahme (42) für eine im Zusammenhang mit der Werkstückbearbeitung wirksame Funktionseinheit (40)
**dadurch gekennzeichnet, daß** der Arm (44) sich ausgehend von mindestens einem am Maschinengestell (10) abgestützten Schwenklager (66, 68) erstreckt, welches den Arm (44) relativ zum Maschinengestell (10) um eine Schwenkachse (46) schwenkbar lagert, daß der Arm (44) im Schwenklager (66, 68) in Richtung der Schwenkachse (46) verschieblich gelagert ist und daß das Bewegen des Arms (44) von der Ruhestellung (R) in die Arbeitsstellung (A) eine Schwenkbewegung um die Schwenkachse (46) umfaßt.

2. Drehmaschine nach Anspruch 1, **dadurch gekennzeichnet, daß** der Arm (44) in der Arbeitsstellung (A) von einer dem die Arbeitsspindel (14) tragenden Maschinengestell (10) gegenüberliegenden Seite des Arbeitsraums (48) in diesen eingreift.

3. Drehmaschine nach Anspruch 1 oder 2, **dadurch gekennzeichnet, daß** der Arm in der Ruhestellung (R) auf einer dem die Arbeitsspindel (14) tragenden Maschinengestell (10) gegenüberliegenden Seite des Arbeitsraums (48) angeordnet ist.

4. Drehmaschine nach einem der voranstehenden Ansprüche, **dadurch gekennzeichnet, daß** der Arm (44) mit einem der Aufnahme (42) abgewandten Bereich an dem Lager (63) gelagert ist.

5. Drehmaschine nach einem der voranstehenden Ansprüche, **dadurch gekennzeichnet, daß** der Arm (44) an zwei im Abstand voneinander angeordneten Lagern (63a, b) gehalten ist.

6. Drehmaschine nach einem der Ansprüche 4 oder 5, **dadurch gekennzeichnet, daß** das Lager (63) in einem auf einem Spindelstock (12) angeordneten Lagergehäuse (62) angeordnet ist.

7. Drehmaschine nach einem der Ansprüche 4 bis 6, **dadurch gekennzeichnet, daß** das Lager (63) in einem Lagergehäuse (62') angeordnet ist, welches sich mit einem Fuß (200) unmittelbar auf dem Maschinengestell (10) abstützt.

8. Drehmaschine nach Anspruch 7, **dadurch gekennzeichnet, daß** der Fuß (200) sich von einem Bereich außerhalb möglicher Arbeitsspindelpositionen und Werkzeugträgerpositionen von dem Maschinengestell (10) ausgehend erhebt und sich bis zu dem Lager (63b) für den Arm (44) erstreckt.

9. Drehmaschine nach einem der voranstehenden Ansprüche, **dadurch gekennzeichnet, daß** das Lager (63b) für den Arm (44) in einer Ebene (E) angeordnet ist, welche auf einer dem Maschinengestell (10) gegenüberliegenden Seite des Arbeitsraums (48) verläuft.

10. Drehmaschine nach Anspruch 9, **dadurch gekennzeichnet, daß** das Lager (63) für den Arm auf einer dem den Spindelstock (12) tragenden Maschinengestell (10) gegenüberliegenden Seite des Spindelstocks (12) angeordnet ist.

11. Drehmaschine nach einem der voranstehenden Ansprüche, **dadurch gekennzeichnet, daß** die Schwenkachse (46) auf einer dem Maschinengestell (10) gegenüberliegenden Seite des Arbeitsraums (48) angeordnet ist.

12. Drehmaschine nach einem der voranstehenden Ansprüche, **dadurch gekennzeichnet, daß** die Schwenkachse (46) im Abstand von einer durch die Spindelachse (16) hindurchverlaufenden und zur X-Achse des Werkzeugträgers (30) parallelen Ebene (E) angeordnet ist.

13. Drehmaschine nach einem der voranstehenden Ansprüche, **dadurch gekennzeichnet, daß** die Schwenkachse (46) des Schwenklagers (66, 68) parallel zur Spindelachse (16) verläuft.

14. Drehmaschine nach einem der voranstehenden Ansprüche, **dadurch gekennzeichnet, daß** der Arm (44) einen Armkörper (51) und einen sich quer zu diesem erstreckenden Armkörperträger (60) umfaßt.

15. Drehmaschine nach Anspruch 14, **dadurch gekennzeichnet, daß** der Armkörperträger (60) sich ungefähr parallel zu einer Z-Achse erstreckt.

16. Drehmaschine nach Anspruch 14 oder 15, **dadurch gekennzeichnet, daß** der Armkörperträger (60) auf einer dem die Arbeitsspindel (12) tragenden Maschinengestell (10) gegenüberliegenden Seite des Arbeitsraums (48) angeordnet ist.

17. Drehmaschine nach einem der Ansprüche 14 bis 16, **dadurch gekennzeichnet, daß** der Armkörperträger (60) in dem am Maschinengestell (10) abgestützten Lager (63) gelagert ist.

18. Drehmaschine nach einem der Ansprüche 14 bis 17, **dadurch gekennzeichnet, daß** der Armkörperträger (60) als Schwenkwelle (60) ausgebildet ist.

19. Drehmaschine nach Anspruch 18, **dadurch gekennzeichnet, daß** die Schwenkwelle (60) das Schwenklager (66, 68) durchsetzt.

20. Drehmaschine nach einem der voranstehenden Ansprüche, **dadurch gekennzeichnet, daß** der Arm (44) durch eine Betätigungseinrichtung (100, 110, 200, 210) in die Ruhestellung (R) und aus der Ruhestellung (R) herausbewegbar ist.

21. Drehmaschine nach Anspruch 20, **dadurch gekennzeichnet, daß** der Arm (44) durch die Betätigungseinrichtung (100, 200) in Z-Richtung bewegbar ist.

22. Drehmaschine nach Anspruch 20 oder 21, **dadurch gekennzeichnet, daß** der Arm (44) durch die Betätigungseinrichtung (110, 210) quer zur Spindelachse (16) bewegbar ist.

23. Drehmaschine nach einem der Ansprüche 20 bis 22, **dadurch gekennzeichnet, daß** die Betätigungseinrichtung einen den Arm (44) quer zur Spindelachse (16) bewegenden Schwenkantrieb (110, 210) aufweist.

24. Drehmaschine nach einem der Ansprüche 20 bis 23, **dadurch gekennzeichnet, daß** die Betätigungseinrichtung einen positionssteuerbaren Vorschubantrieb (200) für eine Linearbewegung des Arms (44) aufweist.

25. Drehmaschine nach einem der Ansprüche 20 bis 24, **dadurch gekennzeichnet, daß** die Betätigungseinrichtung einen den Arm (44 ) quer zur Spindelachse (16) positionsgesteuert bewegenden Vorschubantrieb (210) umfaßt.

26. Drehmaschine nach einem der Ansprüche 20 bis 25, **dadurch gekennzeichnet, daß** die Betätigungseinrichtung (100, 110) mindestens eine Stelleinrichtung umfaßt, die eine eine Ausgangsstellung der Funktionseinheit (40) definierende Endstellung aufweist.

27. Drehmaschine nach einem der voranstehenden Ansprüche, **dadurch gekennzeichnet, daß** die Aufnahme (42) in der Arbeitsstellung (A) mit dem Werkzeugträger (30) in Wirkverbindung bringbar ist und somit zum Erreichen einer wirksamen Stellung der Funktionseinheit (40) durch den Werkzeugträger (30) relativ zur Arbeitsspindel (14) in Richtung mindestens einer der X- oder Z-Achsen positionierbar ist.

28. Drehmaschine nach Anspruch 27, **dadurch gekennzeichnet, daß** der Arm (44) in der Arbeitsstellung (A) der Aufnahme (42) relativ zum Maschinengestell (10) nur insoweit beweglich ist, als er den Bewegungen des Werkzeugträgers (30) relativ zum Maschinengestell (10) in Richtung mindestens einer der X- oder Z-Achsen folgen kann.

29. Drehmaschine nach Anspruch 27 oder 28, **dadurch gekennzeichnet, daß** die Aufnahme (42) von der Ruhestellung (R) in eine Ausgangsstellung (B) bewegbar ist, in welcher die Wirkverbindung mit dem Werkzeugträger (30) herstellbar ist.

30. Drehmaschine nach einem der Ansprüche 27 bis 29, **dadurch gekennzeichnet, daß** die Aufnahme (42) mit einem Mitnehmer (160) versehen ist, auf welchen bei bestehender Wirkverbindung mit dem Werkzeugträger (30) ein Mitnahmeelement (150) am Werkzeugträger (30) einwirkt.

31. Drehmaschine nach Anspruch 30, **dadurch gekennzeichnet, daß** das Mitnahmeelement (150) in einer Ausgangsstellung (B) am Mitnehmer (160) zur Anlage bringbar ist.

32. Drehmaschine nach Anspruch 30 oder 31, **dadurch gekennzeichnet, daß** der Mitnehmer (160) am Arm (44) im Bereich der Aufnahme (42) angeordnet ist.

33. Drehmaschine nach einem der Ansprüche 30 bis 32, **dadurch gekennzeichnet, daß** der Werkzeugträger (30) auf den Mitnehmer (160) mit einem Mitnahmeelement (150) einwirkt, welches eine quer zur X-Richtung verlaufende Mitnahmefläche (152) als Anlagefläche aufweist.

34. Drehmaschine nach einem der Ansprüche 30 bis 33, **dadurch gekennzeichnet, daß** der Werkzeugträger (30) auf den Mitnehmer (160) mit einem Mitnahmeelement (150) einwirkt, welches eine quer zur Z-Richtung verlaufende Mitnahmefläche (154) als Anlagefläche aufweist.

35. Drehmaschine nach einem der Ansprüche 26 bis 34, **dadurch gekennzeichnet, daß** die Stelleinrichtung (100) mit dem Werkzeugträger (30) von der Endstellung weg bewegbar ist.

36. Drehmaschine nach Anspruch 35, **dadurch gekennzeichnet, daß** die Stelleinrichtung (110) zur Bewegung der Aufnahme (42) mittels der Werkzeugträgers (30) über die Endstellung hinaus bewegbar ist.

37. Drehmaschine nach Anspruch 36, **dadurch gekennzeichnet, daß** die Endstellung durch ein kraftbeaufschlagtes Anschlagelement (132) festgelegt ist.

38. Drehmaschine nach einem der Ansprüche 30 bis 37, **dadurch gekennzeichnet, daß** der Arm (44) mit der Betätigungseinrichtung (100, 110) in der Arbeitsstellung (A) so kraftbeauschlagbar ist, daß der Mitnehmer (160) an der jeweiligen Mitnahmefläche (152, 154) des Mitnahmeelements (150) in Anlage bleibt.

39. Drehmaschine nach einem der Ansprüche 20 bis 38, **dadurch gekennzeichnet, daß** die Betätigungseinrichtung (100, 110) stets einer Bewegung des Werkzeugträgers (30) zum Überführen der Funktionseinheit (40) in eine Funktionsstellung entgegenwirkt.

40. Drehmaschine nach Anspruch 39, **dadurch gekennzeichnet, daß** die Betätigungseinrichtung (100, 110) stets allen in der Ausgangsstellung (B) beginnenden Bewegungen des vom Werkzeugträger (30) bewegten Arms (44) entgegenwirkt.

41. Drehmaschine nach einem der Ansprüche 20 bis 40, **dadurch gekennzeichnet, daß** die mindestens eine Betätigungseinrichtung (100, 110) auf die Schwenkwelle (60) des Arms (44) wirkt.

42. Drehmaschine nach einem der voranstehenden Ansprüche, **dadurch gekennzeichnet, daß** die Funktionseinheit (40) als in die Aufnahme (42) einsetzbares Werkzeug (41) ausgebildet ist.

43. Drehmaschine nach Anspruch 42, **dadurch gekennzeichnet, daß** die Aufnahme (42) als eine mittels eines Antriebs (72) antreibbare Werkzeugaufnahme (42) für ein rotierend angetriebenes Werkzeug (41) ausgebildet ist und daß die Werkzeugaufnahme (42) in der Arbeitsstellung (A) mit dem Werkzeugträger (30) in Wirkverbindung bringbar ist und somit zur Bearbeitung des Werkstücks (20) mittels des rotierend angetriebenen Werkzeugs (41) durch den Werkzeugträger (30) relativ zur Arbeitsspindel (14) in Richtung mindestens einer der von der X-Achse und der Z-Achse gebildeten Achsen positionierbar ist.

44. Drehmaschine nach Anspruch 43, **dadurch gekennzeichnet, daß** sich der Arm (44) in der Arbeitsstellung (A) der Werkzeugaufnahme (42) mit seiner Längsrichtung (50) quer zu einer Bewegungsbahn einer Rotationsachse (52) des rotierend angetriebenen Werkzeugs (40) bei dessen Zustellung in Richtung des Werkstücks (20) erstreckt.

45. Drehmaschine nach Anspruch 43 oder 44, **dadurch gekennzeichnet, daß** in der Arbeitsstellung (A) der Werkzeugaufnahme (42) eine Rotationsachse (52) des rotierend angetriebenen Werkzeugs (41) bei einer Bewegung desselben quer zur Spindelachse (16) nahe einer durch die Spindelachse (16) hindurchverlaufenden und zur X-Achse des Werkzeugträgers (30) parallelen Ebene (E) bewegbar ist.

46. Drehmaschine nach einem der Ansprüche 42 bis 45, **dadurch gekennzeichnet, daß** in der Arbeltsstellung (A) der Werkzeugaufnahme (42) die Rotationsachse (52) des rotierend angetriebenen Werkzeugs (41) parallel zur Spindelachse (16) ausgerichtet ist.

47. Drehmaschine nach einem der Ansprüche 42 bis 46, **dadurch gekennzeichnet, daß** die Werkzeugaufnahme (42) von der Ruhestellung (R) In eine Bearbeitungsausgangsstellung (B) bewegbar ist, in welcher die Wirkverbindung mit dem Werkzeugträger (30) herstellbar ist.

48. Drehmaschine nach Anspruch 47, **dadurch gekennzeichnet, daß** das Mitnahmeelement (150) des Werkzeugträgers (30) in der Bearbeitungsausgangsstellung (B) am Mitnehmer (160) der Werkzeugaufnahme (42) zur Anlage bringbar ist.

49. Drehmaschine nach Anspruch 47 oder 48, **dadurch gekennzeichnet, daß** der Mitnehmer (160) am Arm (44) im Bereich der Werkzeugaufnahme (42) für das rotierend angetriebene Werkzeug (41) angeordnet ist.

50. Drehmaschine nach einem der Ansprüche 43 bis 49, **dadurch gekennzeichnet, daß** eine Bearbeitungsbewegung des rotierend angetriebenen Werkzeugs (41) längs der jeweiligen Achsen (X, Z) in einer derartigen Richtung erfolgt, daß eine bei der Bearbeitung des Werkstücks (20) auf das rotierend angetriebene Werkzeug (41) wirkende Gegenkraft eine Kraftkomponente (K₁, K₂) aufweist, welche den Mitnehmer (160) in Richtung mindestens einer Mitnahmefläche (152, 154) beaufschlagt.

51. Drehmaschine nach einem der Ansprüche 39 bis 50, **dadurch gekennzeichnet, daß** die Betätigungseinrichtung (100, 110) mindestens eine Stelleinrichtung (100, 110) umfaßt, die eine die Bearbeitungsausgangsstellung (B) definierende Endstellung aufweist.

52. Drehmaschine nach Anspruch 51, **dadurch gekennzeichnet, daß** die Stelleinrichtung (100) zur Durchführung der Bearbeitungsbewegung von der Endstellung weg bewegbar ist.

53. Drehmaschine nach Anspruch 52, **dadurch gekennzeichnet, daß** die Stelleinrichtung (110) zur Durchführung der Bearbeitungsbewegung über die Endstellung hinaus bewegbar ist.

54. Drehmaschine nach einem der Ansprüche 43 bis 53, **dadurch gekennzeichnet, daß** die Betätigungseinrichtung (100, 110) stets einer Bearbeitungsbewegung des Werkzeugträgers (30) entgegenwirkt.

55. Drehmaschine nach einem der Ansprüche 43 bis 54, **dadurch gekennzeichnet, daß** die Betätigungseinrichtung (100, 110) stets allen in der Bearbeitungsausgangsstellung (B) beginnenden Bearbeitungsbewegungen des vom Werkzeugträger (30) bewegten Arms (44) entgegenwirkt.

56. Drehmaschine nach einem der Ansprüche 43 bis 55, **dadurch gekennzeichnet, daß** ein Antriebsmotor (72) für das rotierend angetriebene Werkzeug (40) am Arm (44) angeordnet ist.

57. Drehmaschine nach Anspruch 56, **dadurch gekennzeichnet, daß** der Antriebsmotor (72) so am Arm (44) angeordnet ist, daß er in allen Stellungen des Arms (44) außerhalb des Arbeitsraums (48) angeordnet ist.

58. Drehmaschine nach Anspruch 56 oder 57, dadurch gekennzelchnet, daß die Schwenkwelle (60) mit einem der Werkzeugaufnahme (42) abgewandten Ende (70) den Antriebsmotor (72) für das rotierend angetriebene Werkzeug (40) trägt.

59. Drehmaschine nach einem der Ansprüche 1 bis 41, **dadurch gekennzeichnet, daß** die Funktionseinheit (40') als an der Aufnahme (42) gehaltene Werkstückabstützung (190) ausgebildet ist.

60. Drehmaschine nach Anspruch 59, **dadurch gekennzeichnet, daß** die Werkstückabstützung ein Reitstock (190) ist.

61. Drehmaschine nach einem der Ansprüche 1 bis 41, **dadurch gekennzeichnet, daß** die Funktionseinheit (40") als an der Aufnahme (42) gehaltene Handhabungseinrichtung (220) ausgebildet ist.

62. Drehmaschine nach Anspruch 61, **dadurch gekennzeichnet, daß** die Handhabungseinrichtung eine Werkstückhandhabungseinrichtung (220) ist.

63. Drehmaschine nach Anspruch 61, **dadurch gekennzeichnet, daß** die Handhabungseinrichtung eine Werkzeughandhabungseinrichtung ist.

64. Drehmaschine nach einem der Ansprüche 1 bis 41, **dadurch gekennzeichnet, daß** die Funktionseinheit (40''') als Meßeinrichtung (230) ausgebildet ist.

65. Drehmaschine nach Anspruch 64, **dadurch gekennzeichnet, daß** die Meßeinrichtung eine Werkstückvermeßeinrichtung (230) ist.

66. Drehmaschine nach Anspruch 64, **dadurch gekennzeichnet, daß** die Meßeinrichtung eine Werkzeugvermeßeinrichtung ist.

## Claims

1. Lathe comprising a machine frame (10), a work spindle (14) disposed on the machine frame (10) for receiving a work piece (20), a tool carrier (30) disposed on the machine frame (10) for receiving a tool (38), a working area (48) in which machining of the work piece (20) can be performed by the tool (38) by way of a relative movement between the tool carrier (30) and the work spindle (14) in the direction of an X-axis and a Z-axis, an arm (44) mounted on the machine frame (10) and movable from a position of rest (R) lying outside the working area (48) into at least one working position (A) lying in the working area (48), and a receiving means (42) provided on the arm (44) for a functional unit (40) operative in association with the work piece machining, **characterized in that** the arm (44) extends from at least one swivel bearing (66, 68) which is supported on the machine frame . (10) and mounts the arm (44) for swivel movement around a swivel axis (46) relative to the machine frame (10), **in that** the arm (44) is mounted in the swivel bearing (66, 68) for displacement in the direction of the swivel axis (46), and **in that** the moving of the arm (44) from the position of rest (R) into the working position (A) comprises a swivel movement around the swivel axis (46).

2. Lathe in accordance with Claim 1, **characterized in that** in the working position (A) the arm (44) engages the working area (48) from a side of the working area (48) lying opposite the machine frame (10) carrying the work spindle (14).

3. Lathe in accordance with Claim 1 or 2, **characterized in that** in the position of rest (R) the arm is disposed on a side of the working area (48) lying opposite the machine frame (10) carrying the work spindle (14).

4. Lathe in accordance with any one of the preceding claims, **characterized in that** the arm (44) is mounted with an area facing away from the receiving means (42) on the bearing (63).

5. Lathe in accordance with any one of the preceding claims,
**characterized in that** the arm (44) is held on two bearings (63a, b) disposed at a distance from one another.

6. Lathe in accordance with Claim 4 or 5, **characterized in that** the bearing (63) is disposed in a bearing housing (62) disposed on a headstock (12).

7. Lathe in accordance with any one of Claims 4 to 6, **characterized in that** the bearing (63) is disposed in a bearing housing (62') which with a foot (200) is supported directly on the machine frame (10).

8. Lathe in accordance with Claim 7, **characterized in that** the foot (200) rises from an area outside possible work spindle positions and tool carrier positions, starting from the machine frame (10), and extends as far as the bearing (63b) for the arm (44).

9. Lathe in accordance with any one of the preceding claims, **characterized in that** the bearing (63b) for the arm (44) is disposed in a plane (E) which extends on a side of the working area (48) lying opposite the machine frame (10).

10. Lathe in accordance with Claim 9, **characterized in that** the bearing (63) for the arm is disposed on a side of the headstock (12) lying opposite the machine frame (10) carrying the headstock (12).

11. Lathe in accordance with any one of the preceding claims, **characterized in that** the swivel axis (46) is disposed on a side of the working area (48) lying opposite the machine frame (10).

12. Lathe in accordance with any one of the preceding claims, **characterized in that** the swivel axis (46) is disposed at a distance from a plane (E) passing through the spindle axis (16) parallel to the X-axis of the tool carrier (30).

13. Lathe in accordance with any one of the preceding claims, **characterized in that** the swivel axis (46) of the swivel bearing (66, 68) runs parallel to the spindle axis (16).

14. Lathe in accordance with any one of the preceding claims, **characterized in that** the arm (44) comprises an arm body (51) and an arm body carrier (60) extending transversely to the arm body (51).

15. Lathe in accordance with Claim 14, **characterized in that** the arm body carrier (60) extends approximately parallel to a Z-axis.

16. Lathe in accordance with Claim 14 or 15, **characterized in that** the arm body carrier (60) is disposed on a side of the working area (48) lying opposite the machine frame (10) carrying the work spindle (12).

17. Lathe in accordance with any one of Claims 14 to 16, **characterized in that** the arm body carrier (60) is mounted in the bearing (63) supported on the machine frame (10).

18. Lathe in accordance with any one of Claims 14 to 17, **characterized in that** the arm body carrier (60) is constructed as a swivel shaft (60).

19. Lathe in accordance with Claim 18, **characterized in that** the swivel shaft (60) penetrates the swivel bearing (66, 68).

20. Lathe in accordance with any one of the preceding claims, **characterized in that** the arm (44) is movable into the position of rest (R) and out of the position of rest (R) by an actuating device (100, 110, 200, 210).

21. Lathe in accordance with Claim 20, **characterized in that** the arm (44) is movable in Z-direction by the actuating device (100, 200).

22. Lathe in accordance with Claim 20 or 21, **characterized in that** the arm (44) is movable transversely to the spindle axis (16) by the actuating device (110, 210).

23. Lathe in accordance with any one of Claims 20 to 22, **characterized in that** the actuating device comprises a swivel drive (110, 210) which moves the arm (44) transversely to the spindle axis (16).

24. Lathe in accordance with any one of Claims 20 to 23, **characterized in that** the actuating device comprises a feed drive (200), the position of which is controllable, for a linear movement of the arm (44).

25. Lathe in accordance with any one of Claims 20 to 24, **characterized in that** the actuating device comprises a feed drive (210) which moves the arm (44) transversely to the spindle axis (16) in a position-controlled manner.

26. Lathe in accordance with any one of Claims 20 to 25, **characterized in that** the actuating device (100, 110) comprises at least one setting device having an end position which defines an initial position of the functional unit (40).

27. Lathe in accordance with any one of the preceding claims, **characterized in that** in the working position (A) the receiving means (42) can be brought into operative connection with the tool carrier (30) and can therefore be positioned by the tool carrier (30) in the direction of at least one of the X- and Z-axes relative to the work spindle (14) in order to arrive at an operative position of the functional unit (40).

28. Lathe in accordance with Claim 27, **characterized in that** in the working position (A) of the receiving means (42) the arm (44) is movable relative to the machine frame (10) only insofar as it can follow the movements of the tool carrier (30) relative to the machine frame (10) in the direction of at least one of the X- and Z-axes.

29. Lathe in accordance with Claim 27 or 28, **characterized in that** the receiving means (42) is movable from the position of rest (R) into an initial position (B) in which the operative connection with the tool carrier (30) can be established.

30. Lathe in accordance with any one of Claims 27 to 29, **characterized in that** the receiving means (42) is provided with an engaging means (160) on which an engaging element (150) on the tool carrier (30) acts when an operative connection with the tool carrier (30) is established.

31. Lathe in accordance with Claim 30, **characterized in that** in an initial position (B) the engaging element (150) can be made to bear on the engaging means (160).

32. Lathe in accordance with Claim 30 or 31, **characterized in that** the engaging means (160) is disposed on the arm (44) in the area of the receiving means (42).

33. Lathe in accordance with any one of Claims 30 to 32, **characterized in that** the tool carrier (30) acts on the engaging means (160) with an engaging element (150) which comprises an engaging surface (152) extending transversely to the X-direction as bearing surface.

34. Lathe in accordance with any one of Claims 30 to 33, **characterized in that** the tool carrier (30) acts on the engaging means (160) with an engaging element (150) which comprises an engaging surface (154) extending transversely to the Z-direction as bearing surface.

35. Lathe in accordance with any one of Claims 26 to 34, **characterized in that** the setting device (100) is movable with the tool carrier (30) away from the end position.

36. Lathe in accordance with Claim 35, **characterized in that** the setting device (110) is movable beyond the end position for movement of the receiving means (42) by the tool carrier (30).

37. Lathe in accordance with Claim 36, **characterized in that** the end position is fixed by a stop element (132) acted upon with force.

38. Lathe in accordance with any one of Claims 30 to 37, **characterized in that** in the working position (A) the arm (44) can be acted upon with force by the actuating device (100, 110) such that the engaging means (160) remains in engagement with the respective engaging surface (152, 154) of the engaging element (150).

39. Lathe in accordance with any one of Claims 20 to 38, **characterized in that** the actuating device (100, 110) always counteracts a movement of the tool carrier (30) for transferring the functional unit (40) into a functioning position.

40. Lathe in accordance with Claim 39, **characterized in that** the actuating device (100, 110) always counteracts all movements starting in the initial position (B) of the arm (44) moved by the tool carrier (30).

41. Lathe in accordance with any one of Claims 20 to 40, **characterized in that** the at least one actuating device (100, 110) acts on the swivel shaft (60) of the arm (44).

42. Lathe in accordance with any one of the preceding claims, **characterized in that** the functional unit (40) is constructed as a tool (41) insertable in the receiving means (42).

43. Lathe in accordance with Claim 42, **characterized in that** the receiving means (42) is constructed as a tool receiving means (42) drivable by a drive (72) for a rotatingly driven tool (41), and **in that** in the working position (A) the tool receiving means (42) can be brought into operative connection with the tool carrier (30) and can therefore be positioned by the tool carrier (30) in the direction of at least one of the axes formed by the X-axis and the Z-axis relative to the work spindle (14) for machining of the work piece (20) by the rotatingly driven tool (41).

44. Lathe in accordance with Claim 43, **characterized in that** in the working position (A) of the tool receiving means (42) the arm (44) extends with its longitudinal direction (50) transversely to a path of movement of a rotational axis (52) of the rotatingly driven tool (40) when the tool (40) is advanced in the direction of the work piece (20).

45. Lathe in accordance with Claim 43 or 44, **characterized in that** in the working position (A) of the tool receiving means (42) a rotational axis (52) of the rotatingly driven tool (41) is movable close to a plane (E) passing through the spindle axis (16) parallel to the X-axis of the tool carrier (30) when the tool (41) moves transversely to the spindle axis (16).

46. Lathe in accordance with any one of Claims 42 to 45, **characterized in that** in the working position (A) of the tool receiving means (42) the rotational axis (52) of the rotatingly driven tool (41) is aligned parallel to the spindle axis (16).

47. Lathe in accordance with any one of Claims 42 to 46, **characterized in that** the tool receiving means (42) is movable from the position of rest (R) into an initial machining position (B) in which the operative connection with the tool carrier (30) can be established.

48. Lathe in accordance with Claim 47, **characterized in that** in the initial machining position (B) the engaging element (150) of the tool carrier (30) can be made to bear on the engaging means (160) of the tool receiving means (42).

49. Lathe in accordance with Claim 47 or 48, **characterized in that** the engaging means (160) is disposed on the arm (44) in the area of the tool receiving means (42) for the rotatingly driven tool (41).

50. Lathe in accordance with any one of Claims 43 to 49, **characterized in that** a machining movement of the rotatingly driven tool (41) along the respective axes (X, Z) occurs in such a direction that a counter force acting on the rotatingly driven tool (41) during machining of the work piece (20) comprises a force component (K₁, K₂) which acts upon the engaging means (160) in the direction of at least one engaging surface (152, 154).

51. Lathe in accordance with any one of Claims 39 to 50, **characterized in that** the actuating device (100, 110) comprises at least one setting device (100, 110) having an end position which defines the initial machining position (B).

52. Lathe in accordance with Claim 51, **characterized in that** the setting device (100) is movable away from the end position for performing the machining movement.

53. Lathe in accordance with Claim 52, **characterized in that** the setting device (110) is movable beyond the end position for performing the machining movement.

54. Lathe in accordance with any one of Claims 43 to 53, **characterized in that** the actuating device (100, 110) always counteracts a machining movement of the tool carrier (30).

55. Lathe in accordance with any one of Claims 43 to 54, **characterized in that** the actuating device (100, 110) always counteracts all machining movements starting in the initial machining position (B) of the arm (44) moved by the tool carrier (30).

56. Lathe in accordance with any one of Claims 43 to 55, **characterized in that** a drive motor (72) for the rotatingly driven tool (40) is disposed on the arm (44).

57. Lathe in accordance with Claim 56, **characterized in that** the drive motor (72) is disposed on the arm (44) in such a way that in all positions of the arm (44) it is disposed outside the working area (48).

58. Lathe in accordance with Claim 56 or 57, **characterized in that** the swivel shaft (60) carries the drive motor (72) for the rotatingly driven tool (40) at an end (70) facing away from the tool receiving means (42).

59. Lathe in accordance with any one of Claims 1 to 41, **characterized in that** the functional unit (40') is constructed as a work piece support (190) held on the receiving means (42).

60. Lathe in accordance with Claim 59, **characterized in that** the work piece support is a tailstock (190).

61. Lathe in accordance with any one of Claims 1 to 41, **characterized in that** the functional unit (40") is constructed as a handling device (220) held on the receiving means (42).

62. Lathe in accordance with Claim 61, **characterized in that** the handling device is a work piece handling device (220).

63. Lathe in accordance with Claim 61, **characterized in that** the handling device is a tool handling device.

64. Lathe in accordance with any one of Claims 1 to 41, **characterized in that** the functional unit (40"') is constructed as a measuring device (230).

65. Lathe in accordance with Claim 64, **characterized in that** the measuring device is a work piece measuring device (230).

66. Lathe in accordance with Claim 64, **characterized in that** the measuring device is a tool measuring device.

## Revendications

1. Tour comportant un bâti de machine (10), une broche de travail (14) disposée sur le bâti de machine (10) et servant à loger une pièce à usiner (20), un porte-outil (30) disposé sur le bâti de machine (10) et servant à loger un outil (38) et un espace de travail (48), dans lequel un usinage de la pièce à usiner (20) peut être exécuté par l'outil (38) au moyen d'un déplacement relatif entre le porte-outil (30) et la broche de travail (14) dans la direction d'un axe X et d'un axe Z, un bras (44), qui est monté sur le bâti de machine (10) et déplaçable depuis une position de repos (R) située à l'extérieur de l'espace de travail (48) pour être amené dans au moins une position de travail (A) située dans l'espace de travail (48), et un logement (42) qui est prévu dans le bras (44) pour une unité fonctionnelle (40) qui agit en liaison avec l'usinage de la pièce à usiner, **caractérisé en ce que** le bras (44) s'étend depuis au moins un palier pivotant (66, 68) qui prend appui sur le bâti de machine (10) et supporte le bras (44) de manière qu'il puisse pivoter par rapport au bâti de machine (10) autour d'un axe de pivotement (46), que le bras (44) est monté dans le palier pivotant (66, 68) en étant translatable dans la direction de l'axe de pivotement (46) et que le déplacement du bras (44) depuis la position de repos (R) dans la position de travail (A) comprend un mouvement de basculement autour de l'axe de pivotement (46).

2. Tour selon la revendication 1, **caractérisé en ce que** dans la position de travail (A), le bras (44) s'engage dans l'espace de travail (48) à partir d'un côté de cet espace de travail, qui est situé à l'opposé du bâti de machine (10) qui porte la broche de travail (14).

3. Tour selon la revendication 1 ou 2, **caractérisé en ce que** dans la position de repos (A), le bras est disposé sur un côté de l'espace de travail (48) qui est situé en vis-à-vis du bâti de machine (10) qui porte la broche de travail (14).

4. Tour selon l'une des revendications précédentes, **caractérisé en ce que** le bras (44) est monté, au moyen d'une partie tournée à l'opposé du logement (42), sur le palier (63).

5. Tour selon l'une des revendications précédentes, **caractérisé en ce que** le bras (44) est retenu dans deux paliers (63a,b) situés à distance l'un de l'autre.

6. Tour selon l'une des revendications 4 ou 5, **caractérisé en ce que** le palier (63) est disposé dans un boîtier de palier (62) disposé sur une poupée porte-broche (12).

7. Tour selon l'une des revendications 4 à 6, **caractérisé en ce que** le palier (63) est disposé dans un boîtier de palier (62'), qui prend appui par un pied (200) directement sur le bâti de machine (10).

8. Tour selon la revendication 7, **caractérisé en ce que** le pied (200) s'élève à partir d'une zone située à l'extérieur de la position possible de la broche de travail et d'une position possible du porte-outil, à partir du bâti de machine (10) et s'étend jusqu'au palier (63b) pour le bras (44).

9. Tour selon l'une des revendications précédentes, **caractérisé en ce que** le palier (63b) pour le bras (44) est disposé dans un plan (U), qui s'étend sur un côté de l'espace de travail (48) situé en vis-à-vis du bâti de machine (10).

10. Tour selon la revendication 9, **caractérisé en ce que** le palier (63) pour le bras est disposé sur un côté de la poupée porte-broche (12), situé à l'opposé du bâti de machine (10) portant la poupée porte-broche (12).

11. Tour selon l'une des revendications précédentes, **caractérisé en ce que** l'axe de pivotement (46) est disposé sur le côté de l'espace de travail (48), situé à l'opposé du bâti de machine (10).

12. Tour selon l'une des revendications précédentes, **caractérisé en ce que** l'axe de pivotement (46) est disposé à distance d'un plan (E) qui passe par l'axe de la broche (16) et est parallèle à l'axe X du porte-outil (30).

13. Tour selon l'une des revendications précédentes, **caractérisé en ce que** l'axe de pivotement (46) du palier pivotant (46, 68) est parallèle à l'axe (16) de la broche.

14. Tour selon l'une des revendications précédentes, **caractérisé en ce que** le bras (44) comprend un corps de bras (51) et un support (60) du corps de bras, qui s'étend transversalement par rapport au corps de bras.

15. Tour selon la revendication 14, **caractérisé en ce que** le support (60) du corps de bras s'étend approximativement parallèlement à un axe Z.

16. Tour selon la revendication 14 ou 15, **caractérisé en ce que** le support (60) du corps de bras est disposé sur un côté de l'espace de travail (48), qui est situé à l'opposé du bâti de machine portant la broche de travail (12).

17. Tour selon l'une des revendications 14 à 16, **caractérisé en ce que** le support (60) du corps de bras est tourillonné dans le palier (63) supporté par le bâti de machine (10).

18. Tour selon l'une des revendications 14 à 17, **caractérisé en ce que** le support (60) du corps de bras est agencé sous la forme d'un arbre pivotant (60).

19. Tour selon la revendication 18, **caractérisé en ce que** l'arbre de pivotement (60) traverse le palier pivotant (66, 68).

20. Tour selon l'une des revendications précédentes, **caractérisé en ce que** le bras (44) peut être amené dans la position de repos (R) et être déplacé à partir de la position de repos (R), par un dispositif d'actionnement (100, 110, 200, 210).

21. Tour selon la revendication 20, **caractérisé en ce que** le bras (44) est déplaçable dans la direction Z au moyen du dispositif d'actionnement (100, 200).

22. Tour selon la revendication 20 ou 21, **caractérisé en ce que** le bras (44) peut être déplacé par le dispositif d'actionnement (110, 210) transversalement par rapport à l'axe (16) de la broche.

23. Tour selon l'une des revendications 20 à 22, **caractérisé en ce que** le dispositif d'actionnement possède un dispositif d'entraînement de pivotement (110, 210) qui déplace le bras (44) transversalement par rapport à l'axe (16) de la broche.

24. Tour selon l'une des revendications 20 à 23, **caractérisé en ce que** le dispositif d'actionnement comporte un dispositif d'avance (200), dont la position peut être commandée, pour un déplacement linéaire du bras (44).

25. Tour selon l'une des revendications 20 à 24, **caractérisé en ce que** le dispositif d'actionnement comprend un dispositif d'entraînement d'avance (210) qui déplace le bras (44), d'une manière commandée en position, transversalement par rapport à l'axe (16) de la broche.

26. Tour selon l'une des revendications 20 à 25, **caractérisé en ce que** le dispositif d'actionnement (100, 110) comprend au moins un dispositif de réglage, qui comporte une position finale définissant une position de départ de l'unité fonctionnelle (40).

27. Tour selon l'une des revendications précédentes, **caractérisé en ce que** dans la position de travail (A), le logement (42) peut être amené à coopérer avec le porte-outil (30) et par conséquent peut être positionné pour atteindre une position efficace de l'unité fonctionnelle (40), à l'aide du porte-outil (30), par rapport à la broche de travail (14) dans la direction d'au moins l'un des axes X ou Z.

28. Tour selon la revendication 27, **caractérisé en ce que** lorsque le logement (42) est dans la position de travail (A), le bras (44) est déplaçable par rapport au bâti de machine (10) uniquement dans la mesure où il peut suivre les déplacements du porte-outil (30) par rapport au bâti de machine (10) dans la direction d'au moins l'un des axes X ou Z.

29. Tour selon la revendication 27 ou 28, **caractérisé en ce que** le logement (42) est déplaçable de la position de repos (R) pour venir dans une position de départ (B), dans laquelle la coopération avec le porte-outil (30) peut être établie.

30. Tour selon l'une des revendications 27 à 29, **caractérisé en ce que** le logement (42) comporte un organe d'entraînement (160), sur lequel un organe d'entraînement (150) situé sur le porte-outil (30) agit dans le cas où il existe une coopération avec le porte-outil (30).

31. Tour selon la revendication 30, **caractérisé en ce que** l'organe d'entraînement (150) peut être amenée dans une position de départ (B), en étant appliqué contre l'organe d'entraînement (160).

32. Tour selon la revendication 30 ou 31, **caractérisé en ce que** l'organe d'entraînement (160) est disposé sur le bras (44) dans la zone du logement (42).

33. Tour selon l'une des revendications 30 à 32, **caractérisé en ce que** le porte-outil (30) agit sur l'organe d'entraînement (160) avec un élément d'entraînement (150), qui comporte comme surface d'application une surface d'entraînement (152) qui s'étend transversalement par rapport à la direction X.

34. Tour selon l'une des revendications 30 à 33, **caractérisé en ce que** le porte-outil (30) agit sur l'organe d'entraînement (160) avec un élément d'entraînement (150), qui possède en tant que surface d'application une surface d'entraînement (154) qui s'étend transversalement par rapport à la direction Z.

35. Tour selon l'une des revendications 26 à 34, **caractérisé en ce que** le dispositif de réglage (100) peut être écarté avec le porte-outil (30), de la position d'extrémité.

36. Tour selon la revendication 35, **caractérisé en ce que** le dispositif de réglage (110) peut être déplacé au-delà de la position d'extrémité pour déplacer le logement (42) à l'aide du porte-outil (30).

37. Tour selon la revendication 36, **caractérisé en ce que** la position d'extrémité est fixée par un élément de butée (132) chargé par une force.

38. Tour selon l'une des revendications 30 à 37, **caractérisé en ce que** le bras (44) équipé du dispositif d'actionnement (100, 110) peut être chargé par une force, dans la position de travail (A), de telle sorte que l'organe d'entraînement (160) reste appliqué contre la surface respective d'entraînement (152, 154) de l'élément d'entraînement (150).

39. Tour selon l'une des revendications 20 à 38, **caractérisé en ce que** le dispositif d'actionnement (100, 110) s'oppose en permanence à un déplacement du porte-outil (30) pour le passage de l'unité fonctionnelle (40) à une position de fonctionnement.

40. Tour selon la revendication 39, **caractérisé en ce que** le dispositif d'actionnement (100, 110) s'oppose en permanence à tous les déplacements, qui commencent dans la position de départ (B), du bras (44) déplacé par le porte-outil (30).

41. Tour selon l'une des revendications 20 à 40, **caractérisé en ce que** le au moins un dispositif d'actionnement (100, 110) agit sur l'arbre de pivotement (60) du bras (44).

42. Tour selon l'une des revendications précédentes, **caractérisé en ce que** l'unité fonctionnelle (40) est agencée sous la forme d'un outil (41) pouvant être inséré dans le logement (42).

43. Tour selon la revendication 42,**caractérisé en ce que** le logement (42) est agencé sous la forme d'un logement d'outil (42), qui peut être entraîné au moyen d'un dispositif d'entraînement (112) pour un outil entraîné en rotation (41) et que dans la position de travail (A), le logement d'outil (42) peut être amené à coopérer avec le porte-outil (30) et par conséquent peut être positionné, pour l'usinage de la pièce à usiner (20) à l'aide de l'outil entraîné en rotation (44), par le porte-outil (30) par rapport à la broche de travail (14) dans la direction d'au moins l'un des axes formés par l'axe X et l'axe Z.

44. Tour selon la revendication 43, **caractérisé en ce que** lorsque le logement d'outil (42) est dans la position de travail (A), le bras (44) s'étend de telle sorte que sa direction longitudinale (50) est transversale par rapport à une trajectoire de déplacement d'un axe de rotation (52) de l'outil entraîné en rotation (40) lors de l'avance de ce dernier en direction de la pièce à usiner (20).

45. Tour selon la revendication 43 ou 44, **caractérisé en ce que** lorsque le logement l'outil (42) dans sa position de travail (A), un axe de rotation (52) de l'outil entraîné en rotation (41) est déplaçable lors d'un déplacement de cet outil transversalement par rapport à l'axe (16) de la broche, à proximité d'un plan (E) qui passe par l'axe (16) de la broche et est parallèle à l'axe X du porte-outil (30).

46. Tour selon l'une des revendications 42 à 45, **caractérisé en ce que** lorsque le logement d'outil (42) est dans la position de travail (A), l'axe de rotation (52) de l'outil entraîné en rotation (41) est orienté parallèlement à l'axe (16) de la broche.

47. Tour selon l'une des revendications 42 à 46, **caractérisé en ce que** logement d'outil (42) peut être déplacé de la position de repos (R) dans une position de départ d'usinage (B), dans laquelle la coopération est établie avec le porte-outil (30).

48. Tour selon la revendication 47, **caractérisé en ce que** dans la position de départ (B), l'élément d'entraînement (150) du porte-outil (30) peut être appliqué contre l'organe d'entraînement (160) du logement d'outil (42).

49. Tour selon la revendication 47 ou 48, **caractérisé en ce que** l'organe d'entraînement (150) est disposé sur le bras (44) au niveau du logement d'outil (42) pour l'outil entraîné en rotation (41).

50. Tour selon l'une des revendications 43 à 49, **caractérisé en ce qu'**un déplacement d'usinage de l'outil entraîné en rotation (41) le long des axes respectifs (X, Z) s'effectue dans une direction telle qu'une force antagoniste, qui agit sur l'outil entraîné en rotation (41) lors de l'usinage de la pièce à usiner (20), possède une composante de force (K₁, K₂), qui charge l'organe d'entraînement (160) en direction d'au moins une surface d'entraînement (152, 154).

51. Tour selon l'une des revendications 39 à 50, **caractérisé en ce que** le dispositif d'actionnement (100, 110) comporte au moins un dispositif de réglage (100, 110) qui comporte un position d'extrémité qui définit la position de départ d'usinage (B).

52. Tour selon la revendication 51, **caractérisé en ce que** le dispositif de réglage (100) peut être écarté de la position d'extrémité pour l'exécution du déplacement d'usinage.

53. Tour selon la revendication 52, **caractérisé en ce que** le dispositif de réglage (110) peut être déplacé au-delà de la position d'extrémité pour l'exécution du déplacement d'usinage.

54. Tour selon l'une des revendications 43 à 53, **caractérisé en ce que** le dispositif d'actionnement (100, 110) s'oppose en permanence à un déplacement d'usinage du porte-outil (30).

55. Tour selon l'une des revendications 43 à 54, **caractérisé en ce que** le dispositif d'actionnement (100, 110) s'oppose en permanence à tous les déplacements d'usinage, qui commencent dans la position de départ d'usinage (B), du bras (44) déplacé par le porte-outil (30).

56. Tour selon l'une des revendications 43 à 55, **caractérisé en ce qu'**un moteur d'entraînement (72) pour l'outil entraîné en rotation (40) est installé sur le bras (44).

57. Tour selon la revendication 56, **caractérisé en ce que** le moteur d'entraînement (72) est disposé sur le bras (44) de telle sorte que dans toutes les positions du bras (44), le moteur est disposé à l'extérieur de l'espace de travail (48).

58. Tour selon la revendication 56 ou 57, **caractérisé en ce que** l'arbre de pivotement (60) porte, par une extrémité (70) située à l'opposé du logement d'outil (42), le moteur d'entraînement (72) pour l'outil entraîné en rotation (40).

59. Tour selon l'une des revendications 1 à 41, **caractérisé en ce que** l'unité fonctionnelle (48) est agencée sous la forme d'un support d'outil (190) retenu sur le logement (42).

60. Tour selon la revendication 59, **caractérisé en ce que** le support de pièce à usiner est une contre-poupée (190).

61. Tour selon l'une des revendications 1 à 41, **caractérisé en ce que** l'unité fonctionnelle (40") est agencée sous la forme d'un dispositif de manipulation (200) retenu sur le logement (42).

62. Tour selon la revendication 61, **caractérisé en ce que** le dispositif de manipulation est un dispositif (220) de manipulation de la pièce à usiner.

63. Tour selon la revendication 61, **caractérisé en ce que** le dispositif de manipulation est un dispositif de manipulation de l'outil.

64. Tour selon l'une des revendications 1 à 41, **caractérisé en ce que** l'unité fonctionnelle (40"') est agencée sous la forme d'un dispositif de mesure (230).

65. Tour selon la revendication 64, **caractérisé en ce que** le dispositif de mesure est un dispositif (230) de mesure de la pièce à usiner.

66. Tour selon la revendication 64, **caractérisé en ce que** le dispositif de mesure est un dispositif de mesure de l'outil.
